(19) Europäisches Patentamt
European Patent Office
Office européen des brevets

(11) **EP 2 083 039 A1**

(12) **EUROPEAN PATENT APPLICATION**
published in accordance with Art. 153(4) EPC

(43) Date of publication:
**29.07.2009 Bulletin 2009/31**

(21) Application number: **07791511.4**

(22) Date of filing: **27.07.2007**

(51) Int Cl.:
*C08J 5/18* (2006.01)   *B29C 47/38* (2006.01)
*B29C 59/04* (2006.01)   *B32B 27/30* (2006.01)
*C03C 27/12* (2006.01)   *C08F 8/28* (2006.01)
*C08J 3/12* (2006.01)   *C08L 29/14* (2006.01)
*B29K 59/00* (2006.01)

(86) International application number:
**PCT/JP2007/064817**

(87) International publication number:
**WO 2008/050517 (02.05.2008 Gazette 2008/18)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **23.10.2006 JP 2006287913**
**01.05.2007 JP 2007120466**

(71) Applicant: **Denki Kagaku Kogyo Kabushiki Kaisha Tokyo 103-8338 (JP)**

(72) Inventors:
 • **TSUJI, Tsuyoshi**
   **Itoigawa-shi**
   **Niigata 949-0393 (JP)**
 • **KOHSAKA, Masanobu**
   **Itoigawa-shi**
   **Niigata 949-0393 (JP)**
 • **YOSHII, Shigeharu**
   **Itoigawa-shi**
   **Niigata 949-0393 (JP)**
 • **SAITO, Tomoo**
   **Itoigawa-shi**
   **Niigata 949-0393 (JP)**
 • **MASHIKO, Yoshihiro**
   **Itoigawa-shi**
   **Niigata 949-0393 (JP)**

(74) Representative: **Hartz, Nikolai**
   **Wächtershauser & Hartz**
   **Weinstrasse 8**
   **80333 München (DE)**

(54) **POLYVINYL ACETAL SHEET AND PROCESS FOR PRODUCTION THEREOF**

(57)     Provided are a polyvinyl acetal sheet which is excellent in adhesion to glass, easy in control of adhesion, little colored, highly transparent and excellent in penetration resistance even under high-temperature conditions when the sheet is used for laminated glass or the like, a process for its production and a process for producing polyvinyl acetal particles used for the sheet.

The polyvinyl acetal sheet is produced by molding polyvinyl acetal particles into a sheet with a degree of acetalization of from 75.0 to 84.0 mass% and with a porosity of from 60 to 85%. The polyvinyl acetal particles are preferably produced by an acetalization reaction of 100 parts by mass of a polyvinyl alcohol and from 40 to 75 parts by mass of an aldehyde in the presence of an acid catalyst at a reaction temperature of from 20 to 60°C, and the acetalization reaction comprises supplying the polyvinyl alcohol, the aldehyde and the acid catalyst to a reactor to bring about acetalization, discharging a reaction mixture from the reactor after the degree of acetalization of the produced polyvinyl acetal has reached 13 mass%, and subjecting the discharged reaction mixture to an aging reaction.

Fig. 1

EP 2 083 039 A1

**Description**

TECHNICAL FIELD

The present invention relates to a polyvinyl acetal sheet, a process for producing the same and a process for producing polyvinyl acetal particles used therefor.

BACKGROUND ART

A laminated glass is usually obtained by interposing an interlayer for laminated glass comprising a thermoplastic resin such as polyurethane, an ethylene-vinyl acetate copolymer or a polyvinyl acetal resin (hereinafter also referred to simply as an "interlayer") between two pieces of plate glass (for example, cf. Patent Documents 1 and 2).

The polyvinyl acetal resin is particularly widely used as a raw material for an interlayer in laminated glass of safety glass, paints, adhesives, and so on. The polyvinyl acetal resin is produced by one of various methods, and it is mainly produced by a method called an aqueous medium method, in which an aldehyde is added in an aqueous solution of a polyvinyl alcohol in the presence of an acid catalyst to initiate an acetalization reaction. It is a method wherein precipitates are formed with progress of acetalization and wherein the subsequent reaction proceeds in a heterogeneous system.

In the above-mentioned method, the aldehyde is added generally at a relatively low temperature of at most 20°C and then the temperature is raised to conduct an aging reaction at a temperature of at least 40°C. After completion of the reaction, neutralization with an alkali is conducted. Washing with water and dehydration are repeated to remove impurities, thereby effecting purification, which is followed by drying and commercialization. For producing the polyvinyl acetal resin other known processes than the above-mentioned aqueous medium method include a solvent method, a homogeneous system method, and so on.

The polyvinyl acetal resin produced by the above-mentioned aqueous medium method has been suitably used for production of an interlayer for laminated glass. This laminated glass is widely used for openings such as windows in various transportation facilities, e.g., automobiles and aircrafts, or in buildings. The laminated glass used as the window glass for automobiles and buildings is deservingly required to have the basic performance as glass, e.g., high transparency without white turbidity, coloring, and the like, in addition to safety and security.

However, the conventional laminated glass had a problem in terms of transparency because it was difficult to obtain the interlayer with perfect transparency.

A cause to decrease the transparency of the interlayer may be contamination of an impurity in raw materials during a manufacturing process, or thermal decomposition or oxidative decomposition of the raw material resin. When the raw material resin is thermally decomposed or oxidatively decomposed, the interlayer is colored in light yellow, thereby considerably decreasing the transparency.

In particular, when a raw material resin with too high porosity is used, the raw material resin and a plasticizer might agglomerate in a hopper to form granular masses. The masses of the raw material resin and the plasticizer were not sufficiently mixed upon being supplied into a barrel (heating cylinder) and a portion of the raw material resin in no contact with the plasticizer was sometimes thermally decomposed.

In order to avoid the decomposition, there was an attempt to preliminarily pelletize the raw material resin and the plasticizer and supply pellets thereof to the barrel, but even in this case the thermal decomposition sometimes occurred because of a heat history on the raw material resin during the pelletization.

Furthermore, the laminated glass has such performance that even if an impact is exerted on the laminated glass to break glass, the interlayer interposed between glass sheets is not readily broken and absorbs the impact. Therefore, an impact-exerting substance does not readily penetrate through the laminated glass. Furthermore, the glass laminated with the interlayer remains attached to the interlayer even after broken, so that broken pieces of glass do not scatter, thereby preventing human bodies or things in the transportation facilities, a building or the like from being considerably injured.

Under the above-mentioned circumstances, in order to more safely protect the human bodies and things from the external impact, the interlayer used for laminated glass is required to have performance according to an application of each laminated glass to be used, with respect to the adhesion to glass and strength of penetration resistance.

Various conventional techniques are known as to polyvinyl acetal resins with excellent adhesion used as the interlayer for laminated glass or the like and processes for producing the resins.

For example, Patent Document 1 describes a polyvinyl acetal resin containing a bivalent metal in an amount of at most 30 ppm as an interlayer for laminated glass which is excellent in adhesion, easy in control of adhesion and stable. There was a room for improvement and a demand for further improvement in that the polyvinyl acetal resin was insufficient in the heat resistance and the penetration resistance thereof reduced at high ambient temperatures when used as a polyvinyl acetal sheet molded in the form of a sheet.

Patent Document 1: JP-A-2000-1514

Patent Document 2: JP-A-11-349769

DISCLOSURE OF THE INVENTION

OBJECT TO BE ACCOMPLISHED BY THE INVENTION

It is an object of the present invention to provide a polyvinyl acetal sheet which is excellent in adhesion to glass, easy in control of adhesion, little colored, highly transparent and excellent in penetration resistance even under high-temperature conditions when used for laminated glass or the like, a process for producing the sheet, a process for producing a raw material resin used for the sheet (hereinafter also referred to as "polyvinyl acetal particles"), an interlayer for laminated glass using the sheet, and a laminated glass using the interlayer.

MEANS TO ACCOMPLISH THE OBJECT

The inventor of the present invention intensively and extensively studied to accomplish the above object, and found that the above object was accomplished by a sheet obtained as follows: specific polyvinyl acetal particles with a degree of acetalization of from 75.0 to 84.0 mass% and with a porosity of from 60 to 85%, and preferably, among the polyvinyl acetal particles, polyvinyl acetal particles obtained by reaction of below-mentioned polyvinyl alcohol and aldehyde under specific conditions, is molded into the sheet.
Namely, the present invention resides in the following aspects.

(1) A polyvinyl acetal sheet which is produced by molding polyvinyl acetal particles into a sheet with a degree of acetalization of from 75.0 to 84.0 mass% and with a porosity of from 60 to 85%.
(2) The polyvinyl acetal sheet according to the above aspect (1), wherein the polyvinyl acetal particles are obtained by an acetalization reaction of 100 parts by mass of a polyvinyl alcohol and from 40 to 75 parts by mass of an aldehyde in the presence of an acid catalyst at a temperature of from 20 to 60°C, the acetalization reaction comprising supplying the polyvinyl alcohol, the aldehyde and the acid catalyst to a reactor to bring about acetalization, discharging a reaction mixture from the reactor after the degree of acetalization of the produced polyvinyl acetal has reached 13 mass%, and subjecting the discharged reaction mixture to an aging reaction.
(3) The polyvinyl acetal sheet according to the above aspect (2), wherein the reactor is a reactor the inside of which is filled with a reaction solution.
(4) The polyvinyl acetal sheet according to the above aspect (2) or (3), wherein the inside of the reactor is agitated at an agitation power of from 0.5 to 1.5 kw per unit volume.
(5) The polyvinyl acetal sheet according to any one of the above aspects (1) to (4), wherein the aldehyde contains at least butyraldehyde.
(6) The polyvinyl acetal sheet according to any one of the above aspects (1) to (5), which contains from 10 to 50 parts by mass of a plasticizer to 100 parts by mass of the polyvinyl acetal particles.
(7) A laminate which is produced by laminating at least two polyvinyl acetal sheets as defined in any one of the above aspects (1) to (6).
(8) An interlayer for laminated glass using the polyvinyl acetal sheet or the laminate as defined in any one of the above aspects (1) to (7).
(9) A process for producing the polyvinyl acetal sheet as defined in the above aspect (1), the process comprising supplying the polyvinyl acetal particles and a plasticizer to conduct extrusion with use of a sheet-forming apparatus which comprises a screw extruder having a polyvinyl acetal particle supply section and a plasticizer supply section, a T-die and a take-off unit having an embossing roll and which satisfies a condition of L=0.05 to 0.3 where a distance from the polyvinyl acetal particle supply section to a tip of a screw in the screw extruder is S and a distance from the polyvinyl acetal particle supply section to the plasticizer supply section is L.
(10) The process for producing the polyvinyl acetal sheet according to the above aspect (9), wherein the plasticizer is continuously supplied at a rate of from 20 to 50 kg/h to a supply of 100 kg/h of the polyvinyl acetal particles.
(11) The process for producing the polyvinyl acetal sheet according to the above aspect (9) or (10), which satisfies a condition of $0.2 \leqq Q/Ns \leqq 0.5$ where Q (kg/h) is a sum of a supply of the polyvinyl acetal particles(kg/h) and a supply of the plasticizer (kg/h), and Ns is revolutions per minute (r.p.m.) of the screw.
(12) The process for producing the polyvinyl acetal sheet according to any one of the above aspects (9) to (11), wherein the plasticizer is triethylene glycol di-2-ethyl hexanoate.
(13) The process for producing the polyvinyl acetal sheet according to any one of the above aspects (9) to (12), wherein a thickness of an aperture of the T-die is from 1 to 1.6 times a thickness of the polyvinyl acetal sheet to be produced.

(14) The process for producing the polyvinyl acetal sheet according to any one of the above aspects (9) to (13), wherein the embossing roll is two embossing rolls placed in parallel and satisfying relations of diameters and surface roughnesses represented by the formula (1) below, and wherein the polyvinyl acetal particles extruded from the T-die are made to pass between the embossing rolls to conduct a surface treatment:

$$r_1/r_2 > 0.3 \text{ and } 3.0 > Rz_1/Rz_2 > 1.2 \qquad (1)$$

where $r_1$ is a diameter of the first embossing roll, $r_2$ is a diameter of the second embossing roll, $Rz_1$ is a surface roughness of the first embossing roll, and $Rz_2$ is a surface roughness of the second embossing roll.

(15) An interlayer for laminated glass using the polyvinyl acetal sheet obtained by the process as defined in any one of the above aspects (9) to (14).

(16) A laminated glass using the interlayer for laminated glass as defined in the above aspect (8) or (15).

EFFECT OF THE INVENTION

The present invention provides the polyvinyl acetal sheet which is excellent in adhesion to glass, easy in control of adhesion, little colored, highly transparent, uniform, and excellent in penetration resistance even under high-temperature conditions when used for laminated glass or the like, the process for producing the sheet, the process for producing the polyvinyl acetal particles used for the sheet, the interlayer for laminated glass using the sheet, and the laminated glass using the interlayer.

BRIEF DESCRIPTION OF DRAWINGS

Fig. 1 is a conceptual diagram to show a positional relation among a raw material resin supply section, a plasticizer supply section and a screw in a barrel (heating cylinder) of a screw extruder used in the present invention (L=0.05).
Fig. 2 is a conceptual diagram to show a positional relation among a raw material resin supply section, a plasticizer supply section and a screw in a barrel (heating cylinder) of a screw extruder used in the present invention (L=0.3).
Fig. 3 is a conceptual diagram to illustrate a temperature control method in the barrel of the screw extruder (S/L=1.25).
Fig. 4 is a conceptual diagram to illustrate a temperature control method in the barrel of the screw extruder (S/L=10).

MEANINGS OF SYMBOLS

A: barrel
$A_1$: first transport section
$A_2$: compression melting section
$A_3$: second transport section
B: raw material resin supply section
C: plasticizer supply section
D: screw
E: vent hole
P: screw tip
L: distance from raw material resin supply section B to plasticizer supply section C

BEST MODE FOR CARRYING OUT THE INVENTION

The polyvinyl acetal sheet of the present invention is produced by molding specific polyvinyl acetal particles into a sheet with a degree of acetalization of from 75.0 to 84.0 mass% and with a porosity of from 60 to 85%. The polyvinyl acetal particles used in the present invention are those obtained by an acetalization reaction of a polyvinyl alcohol and an aldehyde in the presence of an acid catalyst.

It is preferable to use a polyvinyl alcohol with an average polymerization degree of from 1,000 to 2,500 and particularly preferably from 1,500 to 2,000, and with a degree of saponification of at least 80 mol% and particularly preferably at least 90 mol%.

If a polyvinyl alcohol with the degree of saponification of less than 80% is used, compatibility with a plasticizer becomes poor. Therefore, the plasticizer might move to a surface of an interlayer to bleed out and crystallize (occurrence of bleeding).

In the present invention, the polyvinyl alcohol is preferably used as a from 3 to 15 mass% aqueous solution from the viewpoint of handling.

An amount of the aldehyde used for the acetalization reaction is appropriately determined in accordance with the aimed degree of acetalization of the polyvinyl acetal, and it is preferably from 40 to 75 parts by mass and particularly preferably from 43 to 65 parts by mass to 100 parts by mass of the polyvinyl alcohol so that the acetalization reaction can efficiently proceed. Furthermore, an amount of butyraldehyde is preferably adjusted to at least 30 mass% and particularly preferably at least 40 mass% to all the aldehydes used because the resultant sheet is improved in the penetration resistance, adhesion, flexibility, and so on.

There are no particular restrictions on the above acid catalyst, and the acid catalyst to be used can be, for example, an inorganic acid such as hydrochloric acid, sulfuric acid or nitric acid, or an organic acid such as acetic acid or p-toluenesulfonic acid. The acid catalyst is added in an appropriate amount generally such that a pH of a reaction solution becomes preferably from 0.3 to 2 and particularly preferably from 0.4 to 1.

Other aldehydes than butyraldehyde can be used in combination if necessary as the aldehyde used for production of the polyvinyl acetal particles.

Examples of the other aldehydes include formaldehyde, paraformaldehyde, acetaldehyde, paracetaldehyde, propionaldehyde, amyl aldehyde, hexylaldehyde, heptyl aldehyde, 2-ethylhexylaldehyde, cyclohexylaldehyde, furfural, glyoxal, glutaraldehyde, benzaldehyde, 2-methylbenzaldehyde, 3-methylbenzaldehyde, 4-methylbenzaldehyde, p-hydroxybenzaldehyde, m-hydroxybenzaldehyde, phenylacetaldehyde, β-phenylpropionaldehyde, and so on, and acetaldehyde and hexylaldehyde are preferably used among them.

The polyvinyl acetal particles used in the present invention are obtained by carrying out an acetalization reaction of the polyvinyl alcohol and the aldehyde in the presence of the acid catalyst preferably in the following manner. That is, a reaction solution comprising the polyvinyl alcohol, the aldehyde and the acid catalyst is filled in a reactor to initiate the acetalization reaction, and the reaction solution is preferably continuously supplied.

Then a reaction mixture is preferably continuously discharged from the reactor after the degree of acetalization of the produced polyvinyl acetal has reached at least 13 mass% and preferably at least 20 mass%. Next, the discharged reaction mixture is subjected to an aging reaction preferably in another reactor to increase the degree of acetalization to from 75 to 84%.

The reactor used in the present invention is preferably a reactor the inside of which is filled with the reaction solution so that the reaction solution is kept in no contact with air.

When a temperature of the above-mentioned acetalization reaction is from 20 to 60°C, preferably from 30 to 45°C, the acetalization reaction can proceed smoothly while suppressing adhesion of the resin to an inner wall and/or agitating blades of the reactor. When an agitation power of the above-mentioned reactor is preferably from 0.5 to 1.5 kw per unit volume and more preferably from 0.6 to 1.2 kw per unit volume, the reaction solution can be uniformly mixed and the porosity of the polyvinyl acetal produced can be from 60 to 85%.

A temperature of the aging reaction of the discharged reaction solution from the inside of the reactor is preferably at least the reaction temperature of the reaction solution and at most 60°C, and particularly preferably at least the reaction temperature of the reaction solution and at most 55°C, so that the aging reaction can smoothly proceed and the porosity of the polyvinyl acetal particles produced can be from 60 to 85%. Furthermore, when the degree of acetalization of the polyvinyl acetal is set to from 75.0 to 84.0 mass% and preferably from 78.0 to 83.0 mass%, a mixing property with a plasticizer can be improved.

If the degree of acetalization of the polyvinyl acetal is less than 75.0 mass%, it results in increase in the number of hydroxyl groups in the polyvinyl acetal and, in turn, degradation of water resistance of the interlayer produced. Therefore, when a laminated glass is produced therefrom, an edge portion of the laminated glass might be subjected to whitening due to penetration of moisture in air. Furthermore, if the degree of acetalization of the polyvinyl acetal is at least 84.0 mass%, the hardness of the polyvinyl acetal becomes too high and the breakage resistance and the penetration resistance of the laminated glass produced might degrade.

A neutralizing agent is added to the above-mentioned aged reaction mixture containing the polyvinyl acetal to terminate the acetalization reaction. There are no particular restrictions on the neutralizing agent and examples thereof include alkali neutralizing agents such as sodium hydroxide, potassium hydroxide, ammonia, sodium acetate, sodium carbonate, sodium hydrogen carbonate and potassium carbonate; alkylene oxides such as ethylene oxide; glycidyl ethers such as ethylene glycol diglycidyl ether.

The reaction mixture after the neutralizing treatment is subjected to steps of filtration, washing with water, and drying to obtain polyvinyl acetal particles. The polyvinyl acetal particles have an average degree of polymerization of preferably from 1,000 to 2,500 and particularly preferably from 1,500 to 2,000. Furthermore, the remaining acetyl group in the polyvinyl acetal particles is in a range of preferably from 0.5 to 3 mass% and particularly preferably from 0.8 to 2 mass%.

Furthermore, the polyvinyl acetal particles are obtained in the form of secondary particles which are formed by agglomeration of primary particles, and a particle size distribution thereof is preferably one in which a peak top is preferably in a range of from 0.1 to 1.0 mm and particularly preferably in a range of from 0.15 to 0.5 mm. If the peak top is less than this range, the particles themselves scatter and it is difficult to handle. It is noted that the particle size distribution in the present invention is measured by using sieves with different meshes based on JIS Z 8815 "sieving test general rules."

The porosity of the polyvinyl acetal particles of the present invention is from 60 to 85%. The porosity of the polyvinyl acetal particles is one in the form of secondary particles produced. If the porosity becomes small, a sheet obtained from a mixture of the polyvinyl acetal particles, additives, and so on becomes nonuniform and it could result in production of unmelted matter on the sheet during the molding process or degradation of the penetration resistance of the sheet. A conceivable reason for it is that the decrease in porosity causes degradation of the mixing property of the polyvinyl acetal particles with an additive such as a plasticizer. On the other hand, if the porosity of the polyvinyl acetal particles is high, the bulk density of the polyvinyl acetal particles become small, which is not preferable from the handling viewpoint. Among others, the porosity of the polyvinyl acetal particles is preferably from 65 to 85% and particularly preferably from 70 to 85%. The porosity can be controlled by adjusting the reaction temperature and/or the agitation power in the acetalization reaction.

The porosity (%) in the present invention means a rate of a void volume in particles relative to a volume of the particles. The void volume in particles is obtained, for example, by an automatic porosimeter (for example, Autopore IV9520 manufactured by SHIMADZU CORPORATION) in accordance with a mercury intrusion technique under a measurement pressure of from 0.003 MPa to 34.5 MPa.

When the polyvinyl acetal sheet is formed from the polyvinyl acetal particles obtained as described above, a plasticizer is preferably used and, if necessary, various additives may be used, such as an ultraviolet absorber, an antioxidant, an adhesion adjuster, a coupling agent, a surfactant, a heat stabilizer, an infrared absorber, a fluorescent agent, a colorant, a dehydrating agent, an antifoamer, an antistatic agent and a flame retardant. These additives may be used singly or in combination of two or more thereof.

The above-mentioned plasticizer may be one of plasticizers conventionally used for plastics, and an ester type plasticizer having an ether bond in its molecule is preferably used among others in the present invention.

Examples of the plasticizer include ethylene glycoldi-2-ethyl butyrate, 1,3-propylene glycol-2-ethyl butyrate, 1,4-propylene glycol-2-ethyl butyrate, 1,2-propylene glycol-2-ethyl butyrate, diethylene glycol-2-ethyl butyrate, diethylene glycol-2-ethyl hexoate, triethylene glycol-2-ethyl butyrate, triethylene glycol-2-ethyl hexanoate, tetraethylene glycol-2-ethyl butyrate, and so on. These plasticizers may be used singly or in combination of two or more thereof.

In the present invention, the adhesion to glass can be improved, particularly, when triethylene glycol di-2-ethyl hexanoate is used.

There are no particular restrictions on the amount of the plasticizer to be added to the polyvinyl acetal particles, and it depends on the average polymerization degree of the polyvinyl acetal particles, the degree of acetalization, the amount of the remaining acetyl group, and so on. Among others, the plasticizer is preferably added in an amount of from 10 to 50 parts by mass, particularly preferably from 20 to 45 parts by mass, to 100 parts by mass of the polyvinyl acetal particles. When the amount is set in this range, the penetration resistance of the sheet obtained can be improved while the melt-moldability is maintained.

The above-mentioned ultraviolet absorber may be one of those conventionally used for plastics. For example, they are benzotriazole type ultraviolet absorbers, hindered amine type ultraviolet absorbers, benzoate type ultraviolet absorbers, and so on.

Examples of the above benzotriazole type ultraviolet absorbers include 2-(5-methyl-2-hydroxyphenyl)benzotriazole, 2-[2-hydroxy-3,5-bis($\alpha,\alpha'$dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-dit-butyl-5-methyl-2-hydroxyphenyl)-5-chlorobenzotriazole, 2-(3,5-di-t-amyl-2-hydroxyphenyl)benzotriazole, 2-(2'-hydroxy-5'-t-octylphenyl)benzotriazole, and so on.

Examples of the above hindered amine type ultraviolet absorbers include 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-di-t-butyl-4-hydroxybenzyl)-2-n-butyl malonate, 4-(3-(3,5-di-t-butyl-4-hydroxyphenyl)propionyloxy)-1-(2-(3-(3,5-di-t-butyl-4-hydroxyphenyl)propionyloxy)ethyl)-2,2,6,6-tetramethyl piperidine, and so on.

Examples of the above benzoate type ultraviolet absorbers include 2,4-di-t-butylphenyl-3,5-di-t-butyl-4-hydroxy benzoate, hexadecyl-3,5-di-t-butyl-4-hydroxy benzoate, and so on.

The above ultraviolet absorbers may be used singly or in combination of two or more thereof. A blending amount of the ultraviolet absorber is preferably from 10 to 100,000 ppm and particularly preferably from 100 to 10,000 ppm to the polyvinyl acetal particles on the mass basis. When the blending amount is set within this range, the light resistance of the produced sheet can be improved while the manufacturing cost is kept low.

The above-mentioned antioxidants are classified, for example, into phenol type antioxidants, phosphorus type antioxidants, sulfur type antioxidants, and so on, and among others, the phenol type antioxidants are preferable and alkyl-substituted phenol type antioxidants are particularly preferable.

The above-mentioned phenol type antioxidants are classified into alkyl-substituted phenol type compounds, acrylate type compounds, triazine group-containing phenol type compounds, and so on.

Examples of the above alkyl-substituted phenol type compounds include 2,6-di-t-butyl-4-methyl phenol, 2,6-dit-butyl-4-ethyl phenol, octadecyl-3-(3,5-di-t-butyl-4-hydroxyphenyl) propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl) propionyloxy)-1,1-dimethylethyl)-2,4,8,10-tetraoxaspiro[5,5]undecane, 1,1,3-tris(2-methyl-4-hydroxy-5-t-butylphenyl) butane, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)propionate) methane, triethylene glycol bis(3-(3-t-butyl-4-hydroxy-5-methylphenyl) propionate), and so on.

Examples of the above acrylate type compounds include 2-t-butyl-6-(3-t-butyl-2-hydroxy-5-methylbenzyl)-4-methylphenyl acrylate, 2,4-di-t-amyl-6-(1-(3,5-di-t-amyl-2-hydroxyphenyl)ethyl)phenyl acrylate, and so on.

Examples of the above triazine group-containing phenol type compounds include 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine, 2-octylthio-4,6-bis-(3,5-di-t-butyl-4-oxyanilino)-1,3,5-triazine, and so on.

The above-mentioned phosphorus type antioxidants are classified into monophosphite type compounds and diphosphite type compounds.

Examples of the monophosphite type compounds include triphenyl phosphite, diphenyl isodecyl phosphite, phenyl diisodecyl phosphite, tris(nonylphenyl) phosphite, tris(dinonylphenyl) phosphite, tris(2-t-butyl-4-methyl phenyl) phosphite, tris(cyclohexylphenyl)phosphite, 2,2-methylene bis(4,6-di-t-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphananthrene-10-oxide, 10-decyloxy-9,10-dihydro-9-oxa-10-phosphaphenanthrene, and so on.

Examples of the above diphosphite type compounds include 4,4'-butylidene-bis(3-methyl-6-t-butylphenyl-ditridecyl phosphite), 4,4'-isopropylidene-bis(phenyl-dialkyl(C12-C15) phosphite), 4,4'-isopropylidene-bis(diphenyl monoalkyl(C12-C15) phosphite), 1,1,3-tris(2-methyl-4-di-tridecyl phosphite-5-t-butylphenyl)butane, tetrakis(2,4-di-t-butylphenyl)-4,4'-biphenylene phosphite, and so on. Among others, the monophosphite type compound is preferable.

Examples of the above-mentioned sulfur-type antioxidants include dilauryl 3,3'-thiodipropionate, distearyl 3,3'-thiodipropionate, lauryl stearyl 3,3'-thiodipropionate, pentaerythritol-tetrakis-(β-laurylthiopropionate), 3,9-bis(2-dodecylthioethyl)-2,4,8,10-tetraoxaspiro[5,5]undecane, and so on.

The above-mentioned antioxidants may be used singly or in combination of two or more thereof. A blending amount of the antioxidant is preferably from 0.001 to 5 parts by mass and particularly preferably from 0.01 to 1 part by mass to 100 parts by mass of the polyvinyl acetal particles. When the amount is set within this range, thermal degradation during melt-molding and oxidative degradation due to contact with ambient air can be prevented while the manufacture cost is kept low.

There are no particular restrictions on the adhesion adjuster, and examples thereof include an alkali metal salt or an alkaline earth metal salt of an organic acid; an alkali metal salt or an alkaline earth metal salt of an inorganic acid; a modified silicone oil, and so on.

These alkali metal salts or alkaline earth metal salts of organic acids or inorganic acids may be used singly or in combination of two or more thereof.

Examples of the organic acids include carboxylic acids such as octylic acid, hexylic acid, butyric acid, acetic acid and formic acid. Examples of the inorganic acids include hydrochloric acid, nitric acid, and so on. The above-mentioned alkali metal salt or alkaline earth metal salt of the organic acid or the inorganic acid may be, for example, a potassium salt, a sodium salt, a magnesium salt, or the like of the above-mentioned organic acid or inorganic acid.

Among others, the alkali metal salt or alkaline earth metal salt of the organic acid or the inorganic acid used is preferably an alkali metal salt such as a potassium salt or an alkaline earth metal salt such as a magnesium salt of an organic acid with a carbon number of preferably from 2 to 16 and particularly preferably from 2 to 10.

Examples of the alkali metal salt or the alkaline earth metal salt of the organic acid with a carbon number of from 2 to 16, which is preferably carboxylic acid, include potassium acetate, magnesium acetate, potassium propionate, magnesium propionate, potassium 2-ethyl butanoate, magnesium 2-ethyl butanoate, potassium 2-ethyl hexylate, magnesium 2-ethyl hexylate, and so on.

There are no particular restrictions on a blending amount of the alkali metal salt or alkaline earth metal salt of the organic acid or inorganic acid, and the amount is preferably from 0.0001 to 1 part by mass, particularly preferably from 0.001 to 0.5 part by mass and further preferably from 0.01 to 0.2 part by mass to 100 parts by mass of the polyvinyl acetal particles. When the amount is set within this range, the adhesion of the sheet can be controlled while the transparency of the laminated glass is not impaired.

The above modified silicone oil may be any one of those obtained generally by a reaction of a compound modified to a polysiloxane. Examples of the compound include an epoxy-modified silicone oil, an ether-modified silicone oil, an ester-modified silicone oil, an amine-modified silicone oil, a carboxyl-modified silicone oil, and so on. These compounds may be used singly or in combination of two or more compounds.

There are no particular restrictions on a molecular weight of the above-mentioned modified silicone oil, and a number-average molecular weight thereof is preferably from 800 to 5,000 and particularly preferably from 1,500 to 4,000. When the molecular weight is set within this range, the compound can be uniformly dispersed on the sheet while the compatibility with the polyvinyl acetal is maintained.

There are no particular restrictions on an amount of the modified silicone oil used, and it is preferably from 0.01 to 0.2 part by mass and particularly preferably from 0.03 to 0.1 part by mass to 100 parts by mass of the polyvinyl acetal particles. When the amount is set within this range, the adhesion of the sheet can be controlled while the good compatibility with the polyvinyl acetal is maintained.

The polyvinyl acetal particles of the present invention can be molded in a sheet by a conventional molding method. A specific molding method may be a method of molding particles in the form of a sheet by melt extrusion, press molding, blow molding, injection molding, calender molding, or a cast method. Particularly preferred is melt extrusion by means of a twin screw extruder having a T-die.

Next, a preferred embodiment for carrying out the present invention will be described referring to the drawings. It should be understood that the embodiment described below is just an example of representative embodiments of the present invention and that the scope of the present invention is by no means restricted by the embodiment.

The present invention is a process for producing a polyvinyl acetal sheet (hereinafter also referred to simply as "sheet") by supplying a raw material resin and a plasticizer simultaneously and carrying out extrusion molding with use of a sheet-forming apparatus which comprises a screw extruder with a barrel having a raw material resin (polyvinyl acetal particles in the present invention) supply section and a plasticizer supply section, a T-die and a take-off unit having an embossing roll, and the screw extruder satisfies a condition of L=0.05 to 0.3 where a distance from the raw material resin supply section to a tip of a screw is S and a distance from the raw material resin supply section to the plasticizer supply section is L.

The screw extruder used in the present invention (hereinafter also referred to simply as "extruder") may be a single screw extruder or a twin screw extruder used for conventional extrusion of thermoplastic resins. The twin screw extruder can be, for example, one of a co-rotation screw deep groove type, a co-rotation screw shallow groove type, a counter-rotation screw oblique axes type, a counter-rotation screw parallel axes type, and so on.

It is preferable to arrange a gear pump at an outlet of the screw extruder. The gear pump is generally a device in which a gear with little space to a casing is rotated inside the casing and in which the plasticized and kneaded resin is confined in a space produced by rotation, pushed and transported thereby. The gear pump suppresses change in an extrusion amount of the raw material resin so that a thickness of the sheet produced becomes uniform. A capacity of the gear pump is optionally selected in accordance with a discharging amount of the extruder.

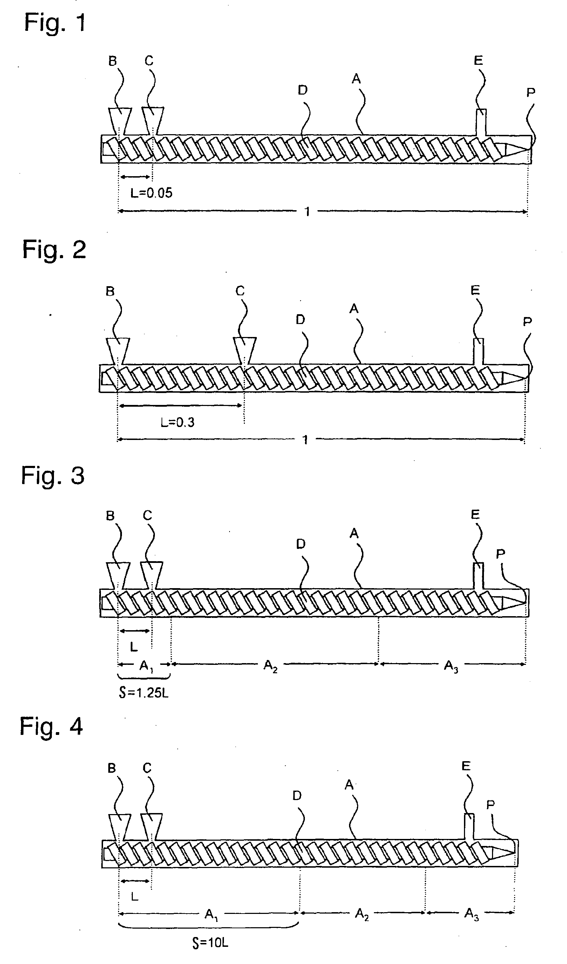

Fig. 1 and Fig. 2 are conceptual diagrams to show a positional relation among the raw material resin supply section, plasticizer supply section and screw in the barrel (heating cylinder) of the screw extruder used in the present invention.

In Fig. 1 and Fig. 2, symbol A designates the barrel, symbol B the raw material resin supply section, symbol C the plasticizer supply section and symbol D the screw. A distance from the raw material resin supply section B to the tip P of the screw D is 1 and a distance from the raw material resin supply section B to the plasticizer supply section C is L. Fig. 1 is a case of L=0.05 and Fig. 2 is a case of L=0.3. Here, symbol E is a vent hole described below.

Setting of the distance L to at least 0.05 means that the raw material resin supply section B and the plasticizer supply section C are independently provided and that the raw material resin and the plasticizer are independently supplied to the barrel A (cf. Fig. 1). This can prevent agglomeration of the raw material resin and the plasticizer, which used to occur in the conventional methods in which the raw material resin and the plasticizer were supplied at the same location and at the same time. Accordingly, a mixing efficiency of the raw material resin and the plasticizer in the barrel A can be improved, whereby thermal decomposition of the raw material resin can be effectively suppressed.

Furthermore, there is no need for preliminarily pelletizing the raw material resin and the plasticizer and then supplying pellets thereof to the barrel, which was conventionally conducted, whereby a heat history on the raw material resin during the pelletization can be eliminated.

Here, if L is less than 0.05, the raw material resin and the plasticizer are agglomerated in the vicinity of the supply sections of the extruder and the mixing efficiency becomes poor, whereby the raw material resin is partially thermally decomposed. On the other hand, if L exceeds 0.3, a time becomes longer to knead the raw material resin in the absence of the plasticizer, which also causes thermal decomposition of the raw material resin.

Therefore, by the setting of L in a range of from 0.05 to 0.3, it becomes feasible to suppress the thermal decomposition of the raw material resin and thus to effectively prevent coloring of the sheet. The setting range of L is preferably from 0.05 to 0.2 and further preferably from 0.08 to 0.12. It can further enhance transparency of the sheet.

Fig. 3 and Fig. 4 are conceptual diagrams to illustrate a temperature control method in the barrel of the screw extruder used in the present invention.

The barrel A has a first transport section $A_1$ on the raw material resin supply section B side, a second transport section $A_3$ on the side of the tip P of the screw D, and a compression melting section $A_2$ between the first transport section $A_1$ and the second transport section $A_3$. Furthermore, a T-die which is not shown is connected to the second transport section $A_3$.

The first transport section $A_1$ is a section to transport the raw material resin and the plasticizer to the compression melting section $A_2$ while mixing them. The compression melting section $A_2$ is a section to knead and plasticize the raw material resin. The kneaded raw material resin is further transported to the T-die via the second transport section $A_3$ and extruded from a resin outlet of the T-die to be molded in the form of a sheet.

When a distance S of the first transport section $A_1$ is set to satisfy S/L=1.25 to 10, an excessive heat history on the raw material resin can be prevented. If S/L is less than 1.0, the raw material resin is heated without being mixing with the plasticizer, which causes an excessive heat history thereon. On the other hand, if S/L exceeds 10, enough lengths cannot be taken for the compression melting section $A_2$ and the second transport section $A_3$, and kneading of materials becomes insufficient, so as to result in a failure in obtaining a uniform sheet. Fig. 3 corresponds to a case of S/L=1.25 and Fig. 4 corresponds to a case of S/L=10.

The heat history on the raw material resin can be further reduced by setting temperatures of the raw material resin in the respective sections as described below.

That is, a setting temperature of the first transport section $A_1$ is the glass transition temperature of the raw material resin plus 0 to 110°C, preferably the glass transition temperature plus 10 to 90°C, and further preferably the glass transition temperature plus 20 to 60°C. Setting temperatures of the compression melting section $A_2$ and the second transport section $A_3$ are the glass transition temperature of the raw material resin plus 60 to 150°C, preferably the glass transition temperature plus 80 to 140°C, and further preferably the glass transition temperature plus 90 to 130°C. Furthermore, a setting temperature of the T-die is the glass transition temperature of the raw material resin plus 70 to 160°C, preferably the glass transition temperature plus 80 to 150°C, and further preferably the glass transition temperature plus 90 to 140°C.

By the above-mentioned setting temperatures, a temperature of the raw material resin at the T-die outlet can be the glass transition temperature plus 70 to 160°C.

Hoppers are containers to stock the raw material resin and the plasticizer. The hoppers of the screw extruder used in the present invention are preferably those capable of keeping the inside airtight. Furthermore, the hoppers are preferably those with a nitrogen-introducing hole in order to prevent oxidation of the raw material resin. Nitrogen introduced into the hopper is further supplied to the inside of the barrel so as to replace the insides of the hopper and the barrel with nitrogen, and is then discharged from a below-described vent hole (symbol E in Figs. 1 to 4) provided in the barrel.

The vent hole E is provided in order to discharge unnecessary volatile components such as moisture contained in the raw material resin and the plasticizer to the outside of the extruder, thereby improving the quantity of the sheet. The vent hole is particularly preferably provided in the second transport section $A_3$ described above (cf. Fig. 3 and Fig. 4). By this arrangement, the insides of the hopper and the barrel can be replaced by nitrogen in a wide range.

One of various types of vacuum pumps unshown is connected to the vent hole E and deaeration is effected by aspiration. The vacuum pump used may be one of conventional pumps and examples thereof include a water seal vacuum pump, an oil seal rotary pump, a mechanical booster pump, and so on. When a degree of vacuum during aspiration by the vacuum pump is in a range of from 30 to 500 torr, the unnecessary volatile components such as moisture can be deaerated without aspirating the plasticizer itself.

When nitrogen gas is continuously supplied at an introducing rate of from 0.1 to 600 L/h per 100 kg/h of the supply amount of the raw material resin supplied, into the hoppers and the barrel, an oxygen partial pressure can be efficiently reduced and oxidative decomposition of the raw material resin can be prevented. Here, the supply amount of nitrogen gas is preferably from 50 to 500 L/h and further preferably from 200 to 400 L/h per 100 kg/h of the supply amount of the raw material resin.

The supply of the raw material resin to the screw extruder can be conducted by means of one of conventional quantitative feeders and there are no particular restrictions thereon. Examples of the feeders available herein include a rotary feeder, a table feeder, a pelle feeder, a belt feeder, a chain feeder, a vibration feeder, a shaking feeder, a screw feeder, and so on.

The supply of the plasticizer to the barrel can be conducted by means of one of conventional various types of pumps and there are no particular restrictions thereon. Examples of the pumps available herein include a reciprocating pump, a rotary pump, an axial-flow pump, a centrifugal pump, and so on.

The plasticizer is preferably continuously supplied in such an amount that a supply rate becomes from 20 to 50 kg/h to 100 kg/h of the raw material resin. When the supply rate is set in this range, adhesion and toughness as a sheet can be optimum while the melt-molding property is maintained. The amount of the plasticizer added is preferably from 30 to 40 kg/h.

A desired relation between a sum Q (kg/h) of the supply of the raw material resin and the supply of the plasticizer to the extruder and revolutions per minute (r.p.m) of the screw Ns is in a range of $0.2 \leqq Q/Ns \leqq 0.5$ and preferably $0.3 \leqq Q/Ns \leqq 0.5$. By the setting of this range, the raw material resin and the plasticizer are sufficiently kneaded and thermal decomposition of the raw material resin can be suppressed.

Here, Q/Ns is a value showing a kneading condition of the raw material resin in the extruder, and the smaller the value, the better the raw material resin is kneaded. If Q/Ns is larger than 0.5, kneading is insufficient, whereby an interlayer obtained becomes nonuniform. On the other hand, if Q/Ns is less than 0.2, thermal decomposition of the raw material resin might occur because of excessive kneading.

A thickness of the polyvinyl acetal sheet of the present invention is preferably from 0.2 to 1.5 mm and particularly preferably from 0.3 to 1 mm. Such sheets may be used preferably in the form of a laminate produced by laminating at least two sheets in accordance with purposes such as improvement in strength, sound insulation, heat insulation, light shielding, and decoration. The laminate of sheets may be made, not only by laminating the sheets having the same composition but also by laminating the sheets having different compositions.

One of conventional problems in the production of a sheet was that contact surfaces of the sheet adhered to each other to integrate during storage in such a condition that the sheet was wound as a roll.

A technique to emboss the surface of the sheet is known as a means for solving this problem. The embossed pattern also serves as a bypass for air bubbles during bonding of the sheet to surfaces of glass, and it is thus useful to obtain a laminated glass without remaining bubbles.

When the sheet after the film-forming step is wound up, blocking between portions of the sheet can be prevented by the embossing process. Furthermore, it provides such an effect that when the sheet is used as an interlayer for laminated glass, unnecessary air remaining between the glass and the sheet can be expelled. A depth and shape of the embossment are selected from those used conventionally.

A method for forming the embossed pattern may be an embossing roll method, a calender roll method, a profile extrusion method, a mechanical etching method or the like, and the embossing roll method is a method of reasonable facility cost and good efficiency.

In the embossing roll method, when the resin extruded from the T-die of the extruder in the form of a sheet is cooled, the sheet is pressed against a surface of an embossing roll to form embossed pattern on the surface of the sheet. In this case, the resin which has been once cooled may be heated again and subjected to the treatment by the embossing roll.

The embossing roll is a roll on a surface of which many big and small irregularities, grooves in a grid pattern or the like are formed.

Since the resin extruded in the form of a sheet from the T-die of the extruder has viscoelasticity, the following was sometimes the case: when the sheet was pressed against the embossing roll, the resin failed to intrude sufficiently into deep portions of depression or grooves of the embossing roll, resulting in a failure in forming a desired embossed shape.

Moreover, there was also the following case: after the treatment by the embossing roll, the embossed pattern returned to the state before the treatment due to the viscoelasticity of the resin during release of the resin from the embossing roll, resulting in a failure in forming a desired embossed shape.

In order to solve the above problems, the inventor of the present invention devised the following method as a process for forming the embossment which is excellent in treatment efficiency and which enables uniform processing.

That is, the method is a process for producing a polyvinyl acetal sheet, wherein the resin extruded from the T-die is made to pass between two embossing rolls which are placed in parallel, to conduct a surface treatment and which satisfy relations of diameters and surface roughnesses represented by the general formula (3) :

$$r_1/r_2 > 0.3 \quad \text{and} \quad 3.0 > Rz_1/Rz_2 > 1.2 \qquad (3)$$

where $r_1$ is a diameter of the first embossing roll, $r_2$ is a diameter of the second embossing roll, $Rz_1$ is a surface roughness of the first embossing roll, and $Rz_2$ is a surface roughness of the second embossing roll.

Here, $r_1/r_2$ is a value defined in order to transfer the embossing pattern onto the resin with accuracy and is set in a range of $r_1/r_2 > 0.3$. That is, as this value is set larger, a time of contact between the resin extruded in the form of a sheet from the T-die and the embossing rolls becomes longer, whereby the resin can intrude sufficiently into deep portions of depressions or grooves of the embossing rolls.

On the other hand, $Rz_1/Rz_2$ is a value defined in order to control the transfer condition of the embossing pattern and is set in a range of $3.0 > Rz_1/Rz_2 > 1.2$. That is, by setting this value in this range, the embossing pattern can be transferred uniformly onto the both sides of the sheet.

Temperatures of the first embossing roll and the second embossing roll are set in a range of from 5 to 15°C and in a range of from 10 to 20°C, respectively. By setting the temperatures of the both embossing rolls in these ranges, the resin extruded from the T-die is prevented from adhering to the embossing rolls and a transfer rate of the embossing pattern from the embossing rolls is good.

Revolution rates of the first embossing roll and the second embossing roll are changed depending on the thickness of the sheet to be produced and are usually from 0.5 to 2.0 r.p.m., and it is preferable to set a retention time to transfer the embossing pattern.

Furthermore, the embossing rolls used herein may be not only rolls made of metal but also rolls made of rubber with irregularities on the surface. When rubber is used as the material, the surfaces of the embossing rolls is transformable, whereby the time of contact between the resin extruded in the form of a sheet from the T-die and the embossing rolls can be made longer.

The polyvinyl acetal sheet obtained by molding the polyvinyl acetal particles of the present invention, or a laminate produced by laminating at least two sheets is considerably useful as an interlayer for laminated glass, and the interlayer can be used for production of the laminated glass with high safety.

EXAMPLES

Now, the present invention is explained in further detail referring to examples, but it should be understood that the present invention is by no means construed as restricted to only the examples.

EXAMPLE 1

PRODUCTION OF POLYVINYL ACETAL PARTICLES

900 g of pure water and 100 g of polyvinyl alcohol with an average polymerization degree of 1,700 and with a degree of saponification of 98 mol% were charged in a 3L dissolution tank equipped with an agitator, and the mixture was heated to obtain an aqueous solution of polyvinyl alcohol.

A cylindrical hermetically-closed reactor of glass with three supply inlets in a lower portion and one discharge outlet in an upper portion was prepared, the inside of the reactor was filled with pure water, and the internal temperature was maintained at 40°C under agitation with anchor blades.

While continuing the agitation with the anchor blades at the internal temperature of 40°C, a 10-mass% polyvinyl alcohol aqueous solution, 35-mass% hydrochloric acid as an acid catalyst, and butyraldehyde were prepared and introduced into the reactor from the lower portion thereof so that the supply rates of the polyvinyl alcohol aqueous solution, hydrochloric acid and butyraldehyde became 60 g/hr, 5.1 g/hr and 3.6 g/hr, respectively, to bring about an acetalization reaction.

After the degree of acetalization of the produced polyvinyl acetal reached at least 13 mass%, a reaction mixture was discharged from the upper portion of the reactor while the polyvinyl alcohol aqueous solution, hydrochloric acid and butyraldehyde were introduced from the lower portion of the reactor. The discharged solution was sampled from the hermetically-closed reactor and subjected to a measurement, and it was found that the degree of acetalization at the outlet of the reactor was 40 mass%. The above reaction was carried out while the agitation of the cylindrical hermetically-closed reactor of glass was maintained at an agitation power of 0.8 kw/m$^3$ throughout the reaction.

The discharged reaction mixture was transferred to a 2L aging tank separately prepared (transfer amount: 1L) and 60 parts by mass of 35-mass% hydrochloric acid was added into the aging tank, followed by an aging reaction at 60°C for 4 hours.

An aqueous solution of sodium hydroxide was added to the aged reaction mixture to adjust the pH at 7.5, thereby terminating-the acetalization reaction. The reaction mixture after the neutralization was cooled to room temperature, filtered by a centrifugal separator, washed with distilled water in an amount of 20 times the volume of the polymer, and dried to obtain polyvinyl acetal particles.

The polyvinyl acetal particles obtained had a particle size distribution with a peak top in a range of from 0.25 to 0.5 mm, a degree of acetalization of 79.8 mass% and a porosity of 75%. It should be noted that the porosity of the polyvinyl acetal particles was measured with an automatic porosimeter: Autopore IV9520 manufactured by SHIMADZU CORPORATION, in accordance with the mercury intrusion technique under a measurement pressure of from 0.003 to 34.5 MPa, and the porosity was found to be 75%. Mercury used for the measurement of porosity had a contact angle of 140°, a surface tension of 485 dynes/cm and a density of 13.53 g/ml.

PREPARATION OF POLYVINYL ACETAL SHEET

35 parts by mass of triethylene glycol di-2-ethyl hexanoate was added as a plasticizer in 100 parts by mass of the formed polyvinyl acetal particles and the mixture was mixed. The resultant mixture was kneaded well by twin rollers heated at 85°C. A molded product of a sheet form thus obtained was heat-pressed under a pressure of 20 kg/cm$^2$ and a temperature of 140°C by a pressing machine regulated by a spacer, to obtain a sheet with a thickness of 0.76 mm.

PREPARATION OF LAMINATED GLASS

The polyvinyl acetal sheet obtained was placed like a sandwich between two transparent float glass plates 300 mm square and 2 mm thick, and preliminary bonding was carried out by a roll method. Then, the laminate was subjected to pressure-bonding under a pressure of 12 kg/cm$^2$ in an autoclave at 140°C for 30 minutes to produce a laminated glass.

MEASUREMENT OF PENETRATION RESISTANCE

The measurement of penetration resistance of the sheet was carried out in accordance with JIS R 3212 as follows: from different heights, a steel ball with a mass of 2260±20 g and a diameter of about 82 mm was dropped onto a central region of each sample, for laminated glass samples with a size of about 300x300 mm after stored at 25°C and at 55°C for at least 4 hours. The test was carried out several times and a maximum height was determined among those at which a degree of penetration by the steel ball was below 50%. The maximum height was regarded as the penetration resistance.

EVALUATION OF MELT-EXTRUSION PERFORMANCE

A mixture obtained by kneading 35 parts by mass of triethylene glycol-di-2-ethyl hexanoate as a plasticizer to the polyvinyl acetal particles obtained by the present invention was continuously charged into a twin screw extruder with a T-die mold being connected, and it was extruded in the form of a sheet at the T-die setting temperature as shown in Table 1.
The sheet thus obtained was visually observed to confirm whether of not unmelted matter was present. Furthermore, a temperature of the mixture around the tip inside the extruder and a temperature of the sheet immediately after discharged from the T-die were measured.

EXAMPLE 2

Polyvinyl acetal particles were produced by carrying out the reaction in the same manner as in Example 1 except that a mixture of acetaldehyde and butyraldehyde (acetaldehyde/butyraldehyde=50/50 mass ratio), instead of butyraldehyde in Example 1, was supplied at a supply rate of 3.3 g/hr, and the polyvinyl acetal particles obtained were evaluated as in Example 1. The polyvinyl acetal particles had a particle size distribution with a peak top in the range of from 0.15 to 0.25 mm, a degree of acetalization of 83.2 mass% and a porosity of 82%.

EXAMPLE 3

Polyvinyl acetal particles were produced by carrying out the reaction in the same manner as in Example 2 except that the agitation power of the cylindrical hermetically-closed reactor of glass was changed to 0.5 kw/m$^3$, and the polyvinyl acetal particles obtained were evaluated as in Example 2. The polyvinyl acetal particle had a particle size distribution with a peak top in the range of from 0.15 to 0.25 mm, a degree of acetalization of 83.1 mass% and a porosity of 70%.

EXAMPLE 4

Polyvinyl acetal particles were produced by carrying out the reaction in the same manner as in Example 2 except that the agitation power of the cylindrical hermetically-closed reactor of glass was changed to 1.2 kw/m$^3$, and the polyvinyl acetal particles obtained were evaluated as in Example 2. The polyvinyl acetal particle had a particle size distribution with a peak top in the range of from 0.15 to 0.25 mm, a degree of acetalization of 82.9 mass% and a porosity of 78%.

EXAMPLE 5

Polyvinyl acetal particles were produced by carrying out the reaction in the same manner as in Example 2 except that the reaction temperature was maintained at 50°C throughout the reaction, and the polyvinyl acetal particles obtained were evaluated as in Example 2. The polyvinyl acetal particle had a particle size distribution with a peak top in the range of from 0.15 to 0.25 mm, a degree of acetalization of 83.5 mass% and a porosity of 77%.

EXAMPLE 6

Polyvinyl acetal particles were produced by carrying out the reaction in the same manner as in Example 2 except that the temperature of the cylindrical hermetically-closed reactor of glass was changed to 30°C and the temperature of the aging tank was 60°C, and the polyvinyl acetal particles obtained were evaluated as in Example 2. The polyvinyl acetal particle had a particle size distribution with a peak top in the range of from 0.15 to 0.25 mm, a degree of acetalization of 82.7 mass% and a porosity of 75%.

EXAMPLE 7

Polyvinyl acetal particles were produced by carrying out the reaction in the same manner as in Example 2 except that the ratio of acetaldehyde and butyraldehyde in the mixture in Example 2 was changed to acetaldehyde/ butyraldehyde=70/30 mass ratio, and the polyvinyl acetal particles obtained were evaluated as in Example 2. The polyvinyl acetal particle had a particle size distribution with a peak top in the range of from 0.15 to 0.25 mm, a degree of acetalization of 81.7 mass% and a porosity of 80%.

EXAMPLE 8

Polyvinyl acetal particles were produced by carrying out the reaction in the same manner as in Example 2 except that the ratio of acetaldehyde and butyraldehyde in the mixture in Example 2 was changed to acetaldehyde/ butyraldehyde=30/70 mass ratio, and the polyvinyl acetal particles obtained were evaluated as in Example 2. The polyvinyl acetal particle had a particle size distribution with a peak top in the range of from 0.15 to 0.25 mm, a degree of acetalization of 82.0 mass% and a porosity of 73%.

EXAMPLE 9

Polyvinyl acetal particles were produced by carrying out the reaction in the same manner as in Example 2 except that a polyvinyl alcohol with an average polymerization degree of 2,000 and with a saponification degree of 98.5 mol% was used instead of that in Example 2, and the polyvinyl acetal particles obtained were evaluated as in Example 2. The polyvinyl acetal particle had a particle size distribution with a peak top in the range of from 0.15 to 0.25 mm, a degree of acetalization of 83.0 mass% and a porosity of 81%.

EXAMPLE 10

A sheet was produced and evaluated in the same manner as in Example 1 except that the amount of the plasticizer in the preparation of the sheet and in the evaluation of the melt-extrusion performance in Example 1 was changed to 40 mass%.
Table 1 collectively shows the preparation conditions of the polyvinyl acetal particles, physical properties of the polyvinyl acetal particles produced, and evaluation results of sheet performance in Examples 1 to 10.

EXAMPLE 11

A laminated glass was produced in the same manner as in Example 1 except that a laminate obtained by laminating the sheet produced in Example 1 and the sheet produced in Example 2, was used as the sheet sandwiched between the two glass plates in the production of laminated glass.

EXAMPLE 12

A laminated glass was produced in the same manner as in Example 1 except that a laminate obtained by laminating the sheet produced in Example 2 and the sheet produced in Example 6 was used as the sheet sandwiched between the two glass plates in the production of laminated glass.

EXAMPLE 13

A laminated glass was produced in the same manner as in Example 1 except that a laminate obtained by laminating the sheet produced in Example 1 and the sheet produced in Example 10 was used as the sheet sandwiched between the two glass plates in the production of laminated glass.

EXAMPLE 14

A laminated glass was produced in the same manner as in Example 1 except that a three-layered laminate obtained by sandwiching the sheet obtained in Example 1 between the sheets obtained in Example 2 was used as the sheet sandwiched between the two glass plates in the production of laminated glass.

EXAMPLE 15

A laminated glass was produced in the same manner as in Example 1 except that a three-layered laminate obtained by sandwiching the sheet obtained in Example 2 between the sheets obtained in Example 1 was used as the sheet sandwiched between the two glass plates in the production of laminated glass.
Table 2 collectively shows the evaluation results of penetration resistance in Examples 11 to 15.

COMPARATIVE EXAMPLE 1

Polyvinyl acetal particles were produced by carrying out the reaction in the same manner as in Example 1 except that the reaction temperature was maintained at 70°C throughout the reaction, and the polyvinyl acetal particles obtained were evaluated as in Example 1. The polyvinyl acetal particle had a particle size distribution with a peak top in the range of from 0.25 to 0.5 mm, a degree of acetalization of 80.5 mass% and a porosity of 55%.

COMPARATIVE EXAMPLE 2

Polyvinyl acetal particles were produced by carrying out the reaction in the same manner as in Example 1 except that the reaction temperature was maintained at 10°C throughout the reaction, and the polyvinyl acetal particles obtained were evaluated as in Example 1. The polyvinyl acetal particle had a particle size distribution with a peak top in the range of from 0.25 to 0.5 mm, a degree of acetalization of 70.0 mass% and a porosity of 67%.

COMPARATIVE EXAMPLE 3

Polyvinyl acetal particles were produced by carrying out the reaction in the same manner as in Example 2 except that the agitation power was changed to 0.3 kw/m$^3$, and the polyvinyl acetal particles obtained were evaluated as in Example 2. The polyvinyl acetal particle had a particle size distribution with a peak top in the range of from 0.15 to 0.25 mm, a degree of acetalization of 83.0 mass% and a porosity of 58%.
Table 1 collectively shows the physical properties, evaluation results of performance, and others.

TABLE 1

| | Example | | | | | | |
|---|---|---|---|---|---|---|---|
| | 1 | 2 | 3 | 4 | 5 | 6 | 7 |
| Polymerization degree of PVA | 1700 | 1700 | 1700 | 1700 | 1700 | 1700 | 1700 |
| Aldehyde species and ratio (mass) of amounts used *1 | B | A/B= 50/50 | A/B= 50/50 | A/B= 50/50 | A/B= 50/50 | A/B= 50/50 | A/B= 70/30 |
| Parts of aldehyde (parts by mass) | 60 | 55 | 55 | 55 | 55 | 55 | 55 |
| Reaction temperatures (°C) | | | | | | | |
| Closed reactor | 40 | 40 | 40 | 40 | 50 | 30 | 40 |
| Aging tank | 60 | 60 | 60 | 60 | 50 | 60 | 60 |
| Agitation power of closed reactor (kw/m³) | 0.8 | 0.8 | 0.5 | 1.2 | 0.8 | 0.8 | 0.8 |
| | | | | | | | |
| Degree of acetalization (mass%) | 79.8 | 83.2 | 83.1 | 82.9 | 83.5 | 82.7 | 81.7 |
| Porosity (%) | 75 | 82 | 70 | 78 | 77 | 75 | 80 |
| Sheet properties | | | | | | | |
| Blending amount of plasticizer (parts by mass) | 35 | 35 | 35 | 35 | 35 | 35 | 35 |
| Penetration resistance (m) | | | | | | | |
| 25°C | 4.2 | 4.2 | 4.2 | 4.2 | 4.2 | 4.2 | 3.8 |
| 55°C | 3.6 | 4.2 | 4.0 | 4.2 | 4.0 | 4.0 | 3.6 |
| Evaluation of melt-extruded sheet | | | | | | | |
| Blending amount of plasticizer (parts by mass) | 35 | 35 | 35 | 35 | 35 | 35 | 35 |
| Mixture temperature around tip of extruder (°C) | 218 | 216 | 216 | 216 | 217 | 217 | 219 |
| T-die setting temperature (°C) | 200 | 200 | 200 | 200 | 200 | 200 | 200 |
| Temperature of sheet discharged from T-die (°C) | 197.1 | 196.8 | 196.9 | 197.0 | 196.9 | 197.2 | 197.0 |
| Sheet condition | Good | Good | Good | Good | Good | Good | Good |

EP 2 083 039 A1

TABLE 1 (continued)

| | Example | | | Comparative Example | | |
|---|---|---|---|---|---|---|
| | 8 | 9 | 10 | 1 | 2 | 3 |
| Polymerization degree of PVA | 1700 | 2000 | 1700 | 1700 | 1700 | 1700 |
| Aldehyde species and ratio (mass) of amounts used *1 | A/B= 30/70 | A/B= 50/50 | B | B | B | A/B= 50/50 |
| Parts of aldehyde (parts by mass) | 55 | 55 | 60 | 60 | 60 | 55 |
| Reaction temperatures (°C) | | | | | | |
| Closed reactor | 40 | 40 | 40 | 70 | 10 | 40 |
| Aging tank | 60 | 60 | 60 | 70 | 10 | 60 |
| Agitation power of closed reactor (kw/m$^3$) | 0.8 | 0.8 | 0.8 | 0.8 | 0.8 | 0.3 |
| | | | | | | |
| Degree of acetalization (mass%) | 82.0 | 83.0 | 79.8 | 80.5 | 70.0 | 83.0 |
| Porosity (%) | 73 | 81 | 75 | 55 | 70 | 58 |
| Sheet properties | | | | | | |
| Blending amount of plasticizer (parts by mass) | 35 | 35 | 40 | 35 | 35 | 35 |
| Penetration resistance (m) | | | | | | |
| 25°C | 4.0 | 4.4 | 3.8 | 3.6 | 3.0 | 3.8 |
| 55°C | 4.0 | 4.2 | 3.8 | 1.8 | 1.4 | 1.8 |
| Evaluation of melt-extruded sheet | | | | | | |
| Blending amount of plasticizer (parts by mass) | 35 | 35 | 35 | 35 | 35 | 35 |
| Mixture temperature around tip of extruder (°C) | 218 | 219 | 216 | 217 | 215 | 218 |
| T-die setting temperature (°C) | 200 | 200 | 200 | 200 | 200 | 200 |
| Temperature of sheet discharged from T-die (°C) | 197.0 | 197.0 | 195.5 | 197.3 | 197.4 | 197.5 |
| Sheet condition | Good | Good | Good | Poor*2 | Poor*2 | Poor*2 |

*1: A acetaldehyde   B butyraldehyde
*2: Unmelted matter present in the sheet.

EP 2 083 039 A1

TABLE 2

| | Example | | | | |
|---|---|---|---|---|---|
| | 11 | 12 | 13 | 14 | 15 |
| Structure of sheets in laminate | Ex. 1/Ex. 2 | Ex. 2 /Ex. 6 | Ex. 1 /Ex. 10 | Ex. 2 /Ex. 1 /Ex. 2 | Ex. 1 /Ex. 2 /Ex. 1 |
| Sheet properties | | | | | |
| Penetration resistance (m) | | | | | |
| 25°C | 6.0 | 6.0 | 5.6 | 7.6 | 7.6 |
| 55°C | 6.0 | 6.0 | 5.4 | 7.6 | 7.4 |

EXAMPLE 21

FACILITIES FOR SHEET-FORMING TEST

Examples were carried out with the following facilities for sheet-forming test.

(1) Screw extruder: a twin screw extruder (screw $\varphi$:48 mm, L/D=45) with a raw material resin supply inlet, a plasticizer supply inlet and a vent hole, manufactured by TOSHIBA MACHINE CO., LTD.

(2) Distance L from the raw material resin supply section to the plasticizer supply section of the extruder: 0.15 where the distance from the raw material resin supply section to the tip of the screw of the extruder is S.

(3) Raw material resin hopper: a 200L tank in a nitrogen-sealing hermetically-closed structure in which a screw feeder is installed in a lower portion of the tank.

(4) Plasticizer tank: a 200L tank.

(5) Plasticizer supply pump: a triple-barreled plunger pump (manufactured by FUJI-TECHNO CORPORATION).

(6) Vacuum pump: an oil-seal rotary vacuum pump installed at the vent hole for deaeration in the extruder (manufactured by TAIKO KIKAI INDUSTRIES CO., LTD.). A degree of vacuum was set at 300 torr.

(7) Gear pump: a gear pump (capacity: 120 L/h) installed at the outlet of the extruder.

(8) T-die: a width of 1100 mm.

(9) Embossing rolls (take-off unit): the first roll with a roll width of 1,200 mm, a diameter $r_1$=600 mm, and a surface roughness $Rz_1$=45 $\mu$m;, the second roll with a roll width of 1,200 mm, a diameter $r_2$=450 mm, and a surface roughness $Rz_2$=30 $\mu$m; $r_1/r_2$=1.3 and $Rz_1/Rz_2$=1.5.

SHEET-FORMING CONDITIONS

The raw material resin used was a polyvinyl butyral (average polymerization degree: 1700, porosity: 78%, glass transition temperature: 73°C, degree of acetalization: 79.8 mass%) resulting from acetalization with butyraldehyde (indicated by B in Table 1), as the polyvinyl acetal.
Furthermore, the plasticizer used was triethylene glycol di-2-ethyl hexanoate. After the raw material hopper was replaced with nitrogen gas, the polyvinyl butyral resin was charged thereinto and a lid was closed tightly. A sheet forming process was carried out while supplying nitrogen gas. The sheet-forming conditions were as follows.

(1) Supply of the raw material resin to the screw extruder: 50 kg/h.
(2) Supply of nitrogen gas into the raw material resin hopper and the barrel: 120 L/h (240 L/h to 100 kg/h of the supply of the raw material resin). The nitrogen gas was continuously supplied on a steady basis during the sheet-forming process.
(3) Supply of the plasticizer: 17 kg/h (34 kg/h to 100 kg/h of the supply of the raw material resin).
(4) Revolutions of the extruder screw (Ns): 150 r.p.m. Q (kg/h), the sum of the supply of the raw material resin (kg/h) and the supply of the plasticizer (kg/h),/Ns=(50+17)/150=0.45.

(5) Barrel setting temperatures: the raw material resin supply section: 140°C and the plasticizer supply section: 180°C (the raw material resin supply section and the plasticizer supply section correspond to the "first transport section $A_1$" as described referring to Fig. 3), and the part from the kneading section to the outlet of the extruder: 200°C (likewise, it corresponds to the "compression melting section $A_2$" and the "second transport section $A_3$," ): 200°C.

(6) T-die setting temperature: 200°C.

By the above settings, the resin temperature at the outlet of the extruder became 210°C and the resin temperature at the outlet of the T-die became 210°C (glass transition temperature (73°C)+137°C).

(7) Clearance of T-die lip (an aperture thickness of the T-die): 0.95 mm.

Here, a thickness of the sheet wound was 0.76 mm (the aperture thickness of the T-die/the thickness of the sheet=1.25).

(8) Take-off rate of the take-off unit: 1.4 m/min.

EVALUATION OF YELLOWNESS OF SHEET

Yellowness of the sheet was measured by a transmission method in accordance with JIS K 7105.

EVALUATION OF SURFACE ROUGHNESS OF SHEET

Surface roughness of the sheet was measured by a surface roughness meter (SURFCOM 1500D manufactured by TOKYO SEIMITSU CO., LTD.). A surface having touched the first roll of the take-off unit was regarded as the front and a surface having touched the second roll of the take-off unit was regarded as the back in the measurement.

EVALUATION OF BLOCKING PROPERTY OF SHEET

In order to evaluate "unlikeliness of blocking due to self-adhesion" between portions of the sheet rolled up, two sheets cut in a size of 150 mm×50 mm were laminated together so that the front of one sheet and the back of the other sheet were brought into contact with each other; a load of 2 kg was placed on the laminate, and the laminate was left at 20°C for 24 hours; then a 180° peeling strength was measured at a rate of 100 mm/min by means of a tensile tester. The larger the value, the larger the adhesion between the sheets.

PREPARATION OF LAMINATED GLASS

The formed sheet was sandwiched between two float glass plates with a thickness of 3 mm and the laminate was preliminarily press-bonded by a roll method. Then, the laminate was press-bonded under a pressure of 12 kg/cm$^2$ in an autoclave at 140°C for 30 minutes to obtain a transparent laminated glass.

EVALUATION OF YELLOWNESS OF LAMINATED GLASS

Yellowness of the laminated glass prepared was measured by a transmission method in accordance with JIS K 7105.

EVALUATION OF BUBBLES REMAINING IN LAMINATED GLASS

In order to evaluate an amount of bubbles remaining in the prepared laminated glass using the sheet, 30 samples of 300 mmx300 mm laminated glass were prepared and heated at 120°C for two hours. Thereafter, the number of laminated glass samples with visually observable bubbles was counted. The evaluation result was represented by the number of bubble samples to the total number of samples.

EVALUATION OF PENETRATION RESISTANCE

Evaluation of penetration resistance of the laminated glass was carried out in accordance with JIS R 3212 as follows: from different heights, a steel ball with a mass of 2260±20 g and a diameter of about 82 mm was dropped onto a central region of a sample, for glass samples with a size of about 300x300 mm after stored at 25°C and at 55°C for at least 4 hours. The test was carried out repeatedly while increasing the dropping height of the steel ball, and the penetration resistance was determined as a maximum height among those at which penetration was not made by a number corresponding to 50% of the total number of test times at an equal height.

EXAMPLE 22

A sheet was prepared and evaluated in the same manner as in Example 21 except that the distance L to the plasticizer supply section was changed to 0.05 when the distance from the raw material resin supply section to the tip of the screw in the extruder was S.

EXAMPLE 23

A sheet was prepared and evaluated in the same manner as in Example 21 except that the distance L to the plasticizer supply section was changed to 0.08 when the distance from the raw material resin supply section to the tip of the screw of the extruder was S.

EXAMPLE 24

A sheet was prepared and evaluated in the same manner as in Example 2 except that the distance L to the plasticizer supply section was changed to 0.3 when the distance from the raw material resin supply section to the tip of the screw of the extruder was S.

EXAMPLE 25

A sheet was produced and evaluated in the same manner as in Example 21 except that the barrel setting temperature from the extruder kneading section to the extruder outlet and the T-die setting temperature were set at 140°C so that the resin temperature at the T-die outlet became 143°C (glass transition temperature+70°C).

EXAMPLE 26

A sheet was produced and evaluated in the same manner as in Example 21 except that the barrel setting temperature from the extruder kneading section to the extruder outlet and the T-die setting temperature were set at 220°C so that the resin temperature at the T-die outlet became 230°C (glass transition temperature+157°C).

EXAMPLE 27

A sheet was produced and evaluated in the same manner as in Example 21 except that the barrel setting temperature from the extruder kneading section to the extruder outlet and the T-die setting temperature were set at 125°C so that the resin temperature at the T-die outlet became 130°C (glass transition temperature+57°C).

EXAMPLE 28

A sheet was produced and evaluated in the same manner as in Example 21 except that the barrel setting temperature from the extruder kneading section to the extruder outlet and the T-die setting temperature were set at 240°C so that the resin temperature at the T-die outlet became 250°C (glass transition temperature+177°C).

EXAMPLE 29

A sheet was produced and evaluated in the same manner as in Example 21 except that after the raw material hopper was replaced with nitrogen, nitrogen was introduced at a rate of 0.05 L/h (0.1 L/h per 100 kg of the raw material resin) during formation of the sheet.

EXAMPLE 30

A sheet was produced and evaluated in the same manner as in Example 21 except that after the raw material hopper was replaced with nitrogen, nitrogen was introduced at a rate of 300 L/h (600 L/h per 100 kg of the raw material resin) during formation of the sheet.

EXAMPLE 31

A sheet was produced and evaluated in the same manner as in Example 21 except that after the raw material hopper was replaced with nitrogen, nitrogen was introduced at a rate of 0.04 L/h (0.08 L/h per 100 kg of the raw material resin) during formation of the sheet.

EXAMPLE 32

A sheet was produced and evaluated in the same manner as in Example 21 except that after the raw material hopper was replaced with nitrogen, nitrogen was introduced at a rate of 400 L/h (800 L/h per 100 kg of the raw material resin) during formation of the sheet.

EXAMPLE 33

A sheet was prepared and evaluated in the same manner as in Example 21 except that the supply rate of the plasticizer into the extruder was changed to 10 kg/h (20 kg/h per 100 kg/h of supply of the raw material resin).

EXAMPLE 34

A sheet was prepared and evaluated in the same manner as in Example 21 except that the supply rate of the plasticizer into the extruder was changed to 25 kg/h (50 kg/h per 100 kg/h of supply of the raw material resin).

EXAMPLE 35

A sheet was prepared and evaluated in the same manner as in Example 21 except that the supply rate of the plasticizer into the extruder was changed to 7 kg/h (14 kg/h per 100 kg/h of supply of the raw material resin).

EXAMPLE 36

A sheet was prepared and evaluated in the same manner as in Example 21 except that the supply rate of the plasticizer into the extruder was changed to 27.5 kg/h (55 kg/h per 100 kg/h of supply of the raw material resin).

EXAMPLE 37

A sheet was produced and evaluated in the same manner as in Example 21 except that the relation Q/Ns was changed to 0.2 where Q (kg/h) was the sum of the supply rate of the raw material resin (kg/h) and the supply rate of the plasticizer (kg/h) to the extruder and Ns (r.p.m.) was revolutions per minute of the screw.

EXAMPLE 38

A sheet was produced and evaluated in the same manner as in Example 21 except that the relation Q/Ns was changed to 0.5 where Q (kg/h) was the sum of the supply rate of the raw material resin (kg/h) and the supply rate of the plasticizer (kg/h) to the extruder and Ns (r.p.m.) was revolutions per minute of the screw.

EXAMPLE 39

A sheet was produced and evaluated in the same manner as in Example 21 except that the relation Q/Ns was changed to 0.15 where Q (kg/h) was the sum of the supply rate of the raw material resin (kg/h) and the supply rate of the plasticizer (kg/h) to the extruder and Ns (r.p.m.) was revolutions per minute of the screw.

EXAMPLE 40

A sheet was produced and evaluated in the same manner as in Example 21 except that the relation Q/Ns was changed to 0.6 where Q (kg/h) was the sum of the supply rate of the raw material resin (kg/h) and the supply rate of the plasticizer (kg/h) to the extruder and Ns (r.p.m.) was revolutions per minute of the screw.
Table 3 collectively shows the evaluation results in Examples 21 to 40.

TABLE 3

| | | | Example 21 | 22 | 23 | 24 | 25 | 26 | 27 | 28 | 29 | 30 |
|---|---|---|---|---|---|---|---|---|---|---|---|---|
| Extruder | | L | 0.15 | 0.05 | 0.08 | 0.3 | 0.15 | 0.15 | 0.15 | 0.15 | 0.15 | 0.15 |
| | | Q/Ns | 0.45 | 0.45 | 0.45 | 0.45 | 0.45 | 0.45 | 0.45 | 0.45 | 0.45 | 0.45 |
| Embossing rolls | First roll | Diameter $r_1$ (mm) | 600 | 600 | 600 | 600 | 600 | 600 | 600 | 600 | 600 | 600 |
| | | Surface roughness $Rz_1$ (μm) | 45 | 45 | 45 | 45 | 45 | 45 | 45 | 45 | 45 | 45 |
| | Second roll | Diameter $r_2$ (mm) | 450 | 450 | 450 | 450 | 450 | 450 | 450 | 450 | 450 | 450 |
| | | Surface roughness $Rz_2$ (μm) | 30 | 30 | 30 | 30 | 30 | 30 | 30 | 30 | 30 | 30 |
| | | $r_1/r_2$ | 1.3 | 1.3 | 1.3 | 1.3 | 1.3 | 1.3 | 1.3 | 1.3 | 1.3 | 1.3 |
| | | $Rz_1/Rz_2$ | 1.5 | 1.5 | 1.5 | 1.5 | 1.5 | 1.5 | 1.5 | 1.5 | 1.5 | 1.5 |
| Raw material resin | | Aldehyde species and ratio | B | B | B | B | B | B | B | B | B | B |
| | | Degree of acetalization (mass%) | 79.8 | 79.8 | 79.8 | 79.8 | 79.8 | 79.8 | 79.8 | 79.8 | 79.8 | 79.8 |
| | | Porosity (%) | 78 | 78 | 78 | 78 | 78 | 78 | 78 | 78 | 78 | 78 |
| | | Supply rate (kg/h) | 50 | 50 | 50 | 50 | 50 | 50 | 50 | 50 | 50 | 50 |
| Plasticizer | | Supply rate (kg/h) | 17 | 17 | 17 | 17 | 17 | 17 | 17 | 17 | 17 | 17 |
| Supply rate of nitrogen gas (L/h) | | | 120 | 120 | 120 | 120 | 120 | 120 | 120 | 120 | 0.05 | 300 |
| Resin temperature at extruder outlet (°C) | | | 210 | 210 | 210 | 210 | 145 | 230 | 130 | 255 | 210 | 210 |
| Resin temperature at T-die outlet (°C) | | | 210 | 210 | 210 | 210 | 143 | 230 | 130 | 250 | 210 | 210 |
| Aperture thickness of T-die (mm) | | | 0.95 | 0.95 | 0.95 | 0.95 | 0.95 | 0.95 | 0.95 | 0.95 | 0.95 | 0.95 |
| Degree of yellowness of sheet | | | 1.1 | 1.1 | 1.1 | 1.2 | 1.2 | 2.0 | 1.3 | 2.5 | 1.3 | 1.1 |
| Surface roughness of sheet Rz (μm) | Front | | 35 | 35 | 35 | 35 | 34 | 37 | 30 | 36 | 35 | 35 |
| | Back | | 35 | 35 | 34 | 34 | 33 | 36 | 30 | 36 | 35 | 35 |
| Blocking property of sheet (g/50 mm) | | | 150 | 140 | 120 | 140 | 170 | 120 | 200 | 130 | 140 | 140 |
| Degree of yellowness of laminated glass | | | 1.2 | 1.2 | 1.1 | 1.2 | 1.2 | 2.3 | 1.2 | 2.3 | 1.3 | 1.1 |
| Bubbling of laminated glass (number of bubble glasses/number of samples) | | | 0/30 | 0/30 | 0/30 | 0/30 | 0/30 | 0/30 | 9/30 | 0/30 | 0/30 | 0/30 |
| Penetration resistance of laminated glass | | | 6.8 | 6.8 | 6.5 | 6.5 | 6.4 | 5.5 | 4.5 | 6.5 | 6.5 | 6.8 |

TABLE 3 (continued)

| | | | Example | | | | | | | | | |
|---|---|---|---|---|---|---|---|---|---|---|---|---|
| | | | 31 | 32 | 33 | 34 | 35 | 36 | 37 | 38 | 39 | 40 |
| Extruder | L | | 0.15 | 0.15 | 0.15 | 0.15 | 0.15 | 0.15 | 0.15 | 0.15 | 0.15 | 0.15 |
| | Q/Ns | | 0.45 | 0.45 | 0.45 | 0.45 | 0.45 | 0.45 | 0.2 | 0.5 | 0.15 | 0.6 |
| Embossing rolls | First roll | Diameter $r_1$ (mm) | 600 | 600 | 600 | 600 | 600 | 600 | 600 | 600 | 600 | 600 |
| | | Surface roughness $Rz_1$ (µm) | 45 | 45 | 45 | 45 | 45 | 45 | 45 | 45 | 45 | 45 |
| | Second roll | Diameter $r_2$ (mm) | 450 | 450 | 450 | 450 | 450 | 450 | 450 | 450 | 450 | 450 |
| | | Surface roughness $Rz_2$ (µm) | 30 | 30 | 30 | 30 | 30 | 30 | 30 | 30 | 30 | 30 |
| | $r_1/r_2$ | | 1.3 | 1.3 | 1.3 | 1.3 | 1.3 | 1.3 | 1.3 | 1.3 | 1.3 | 1.3 |
| | $Rz_1/Rz_2$ | | 1.5 | 1.5 | 1.5 | 1.5 | 1.5 | 1.5 | 1.5 | 1.5 | 1.5 | 1.5 |
| Raw material resin | Aldehyde species and ratio | | B | B | B | B | B | B | B | B | B | B |
| | Degree of acetalization (mass%) | | 79.8 | 79.8 | 79.8 | 79.8 | 79.8 | 79.8 | 79.8 | 79.8 | 79.8 | 79.8 |
| | Porosity (%) | | 78 | 78 | 78 | 78 | 78 | 78 | 78 | 78 | 78 | 78 |
| | Supply rate (kg/h) | | 50 | 50 | 50 | 50 | 50 | 50 | 50 | 50 | 50 | 50 |
| Plasticizer | Supply rate (kg/h) | | 17 | 17 | 10 | 25 | 7 | 27.5 | 17 | 17 | 17 | 17 |
| Supply rate of nitrogen gas (L/h) | | | 0.04 | 400 | 120 | 120 | 120 | 120 | 120 | 120 | 120 | 120 |
| Resin temperature at extruder outlet (°C) | | | 210 | 210 | 210 | 210 | 210 | 210 | 240 | 200 | 210 | 210 |
| Resin temperature at T-die outlet (°C) | | | 210 | 210 | 210 | 210 | 210 | 210 | 240 | 200 | 210 | 210 |
| Aperture thickness of T-die (mm) | | | 0.95 | 0.95 | 0.95 | 0.95 | 0.95 | 0.95 | 0.95 | 0.95 | 0.95 | 0.95 |
| Degree of yellowness of sheet | | | 1.8 | 1.2 | 1.5 | 1.5 | 1.8 | 1.8 | 1.5 | 1.4 | 1.8 | 1.7 |
| Surface roughness of sheet Rz (µm) | Front | | 34 | 33 | 33 | 37 | 25 | 25 | 34 | 34 | 34 | 35 |
| | Back | | 33 | 34 | 33 | 37 | 25 | 25 | 35 | 35 | 32 | 33 |
| Blocking property of sheet (g/50 mm) | | | 120 | 140 | 130 | 110 | 250 | 320 | 150 | 150 | 170 | 150 |
| Degree of yellowness of laminated glass | | | 1.9 | 1.3 | 1.5 | 1.6 | 1.9 | 1.8 | 1.6 | 1.4 | 1.9 | 1.7 |
| Bubbling of laminated glass (number of bubble glasses/number of samples) | | | 0/30 | 0/30 | 6/30 | 8/30 | 9/30 | 3/30 | 0/30 | 0/30 | 3/30 | 8/30 |
| Penetration resistance of laminated glass | | | 6.5 | 6.5 | 4.8 | 4.9 | 4.7 | 4.8 | 6.8 | 6.8 | 4.7 | 4.5 |

EP 2 083 039 A1

EXAMPLE 41

A sheet was prepared and evaluated in the same manner as in Example 21 except that the raw material resin was changed to an ethylene-vinyl acetate copolymer and the plasticizer was changed to di-2-ethylhexyl phthalate.

EXAMPLE 42

A sheet was produced and evaluated in the same manner as in Example 21 except that a resin (average polymerization degree: 1,700, porosity: 80%, glass transition temperature: 93°C, degree of acetalization: 83.2 mass%) subjected to acetalization at acetaldehyde/butyraldehyde (indicated by A/B in Table 4)=50/50 mass ratio was used as the polyvinyl acetal of raw material resin.

EXAMPLE 43

A sheet was produced and evaluated in the same manner as in Example 21 except that a resin (average polymerization degree: 1,700, porosity: 79%, glass transition temperature: 97°C, degree of acetalization: 83.5 mass%) subjected to acetalization at acetaldehyde/butyraldehyde (indicated by A/B in Table 4)=70/30 mass ratio was used as the polyvinyl acetal of raw material resin.

EXAMPLE 44

A sheet was produced and evaluated in the same manner as in Example 21 except that a resin (average polymerization degree: 1,700, porosity: 78%, glass transition temperature: 97°C, degree of acetalization: 83.5 mass%) subjected to acetalization at acetaldehyde/butyraldehyde (indicated by A/B in Table 4)=30/70 mass ratio was used as the polyvinyl acetal of raw material resin.

EXAMPLE 45

A sheet was prepared and evaluated in the same manner as in Example 21 except that the degree of acetalization of the polyvinyl butyral of raw material resin was changed to 70 mass%.

EXAMPLE 46

A sheet was prepared and evaluated in the same manner as in Example 21 except that the degree of acetalization of the polyvinyl butyral of raw material resin was changed to 86 mass%.

EXAMPLE 47

A sheet was prepared and evaluated in the same manner as in Example 21 except that the degree of acetalization of the polyvinyl butyral of raw material resin was changed to 58 mass%.

EXAMPLE 48

A sheet was prepared and evaluated in the same manner as in Example 21 except that the degree of acetalization of the polyvinyl butyral of raw material resin was changed to 88 mass%.

EXAMPLE 49

A sheet was prepared and evaluated in the same manner as in Example 21 except that triethylene glycol-2-ethyl butyrate was used as the plasticizer.

EXAMPLE 50

A sheet was prepared and evaluated in the same manner as in Example 21 except that the clearance of the T-die lip (the aperture thickness of the T-die) was changed to 1.30 mm (1.7 times the thickness of the sheet).

EXAMPLE 51

A sheet was prepared and evaluated in the same manner as in Example 21 except that the diameters $r_1$ and $r_2$ of the first roll and the second roll of the embossing rolls were changed to $r_1$=150 mm and to $r_2$=600 mm, respectively, ($r_1/r_2$=0.25).

EXAMPLE 52

A sheet was prepared and evaluated in the same manner as in Example 21 except that the surface roughnesses $Rz_1$ and $Rz_2$ of the first roll and the second roll of the embossing rolls were changed to $Rz_1$=30 $\mu$m and $Rz_2$=30 $\mu$m, respectively, ($Rz_1/Rz_2$=1.0).

EXAMPLE 53

A sheet was prepared and evaluated in the same manner as in Example 21 except that the surface roughnesses $Rz_1$ and $Rz_2$ of the first roll and the second roll of the embossing rolls were changed to $Rz_1$=57 $\mu$m and $Rz_2$=18 $\mu$m, respectively, ($Rz_1/Rz_2$=3.2).

COMPARATIVE EXAMPLE 21

A sheet was prepared and evaluated in the same manner as in Example 21 except that the distance L to the plasticizer supply section was changed to 0.03 when the distance from the raw material resin supply section to the tip of the screw in the extruder was S.
In this example, a bridge of the raw material resin was made around the raw material supply section of the extruder, so as to result in a failure in extrusion of a sheet.

COMPARATIVE EXAMPLE 22

A sheet was prepared and evaluated in the same manner as in Example 21 except that the distance L to the plasticizer supply section was changed to 0.4 when the distance from the raw material resin supply section to the tip of the screw in the extruder was S.
Table 4 collectively shows the evaluation results in Examples 41 to 53 and Comparative Examples 21 and 22.

TABLE 4

| | | | Example | | | | | | | |
| | | | 41 | 42 | 43 | 44 | 45 | 46 | 47 | 48 |
|---|---|---|---|---|---|---|---|---|---|---|
| Extruder | L | | 0.15 | 0.15 | 0.15 | 0.15 | 0.15 | 0.15 | 0.15 | 0.15 |
| | Q/Ns | | 0.45 | 0.45 | 0.45 | 0.45 | 0.45 | 0.45 | 0.45 | 0.45 |
| Embossing rolls | First roll | Diameter $r_1$ (mm) | 600 | 600 | 600 | 600 | 600 | 600 | 600 | 600 |
| | | Surface roughness $Rz_1$ (μm) | 45 | 45 | 45 | 45 | 45 | 45 | 45 | 45 |
| | Second roll | Diameter $r_2$ (mm) | 450 | 450 | 450 | 450 | 450 | 450 | 450 | 450 |
| | | Surface roughness $Rz_2$ (μm) | 30 | 30 | 30 | 30 | 30 | 30 | 30 | 30 |
| | $r_1/r_2$ | | 1.3 | 1.3 | 1.3 | 1.3 | 1.3 | 1.3 | 1.3 | 1.3 |
| | $Rz_1/Rz_2$ | | 1.5 | 1.5 | 1.5 | 1.5 | 1.5 | 1.5 | 1.5 | 1.5 |
| Raw material resin | Aldehyde species and ratio | | Ethylene-vinyl acetate copolymer | A/B 50/50 | A/B 70/30 | A/B 30/70 | B | B | B | B |
| | Degree of acetalization (mass%) | | | 83.2 | 83.5 | 83.5 | 70 | 86 | 79.8 | 79.8 |
| | Porosity (%) | | | 80 | 79 | 78 | 78 | 78 | 58 | 88 |
| | Supply rate (kg/h) | | 50 | 50 | 50 | 50 | 50 | 50 | 50 | 50 |
| Plasticizer | Supply rate (kg/h) | | 17 (di-2-Ethylhexyl phthalate) | 17 | 17 | 17 | 17 | 17 | 17 | 17 |
| Supply rate of nitrogen gas (L/h) | | | 120 | 120 | 120 | 120 | 120 | 120 | 120 | 120 |
| Resin temperature at extruder outlet (°C) | | | 210 | 210 | 210 | 210 | 210 | 210 | 210 | 210 |
| Resin temperature at T-die outlet (°C) | | | 210 | 210 | 210 | 210 | 210 | 210 | 210 | 210 |
| Aperture thickness of T-die (mm) | | | 0.95 | 0.95 | 0.95 | 0.95 | 0.95 | 0.95 | 0.95 | 0.95 |
| Degree of yellowness of sheet | | | 1.1 | 1.2 | 1.1 | 1.2 | 1.6 | 2 | 1.5 | 1.9 |
| Surface roughness of sheet Rz (μm) | Front | | 36 | 34 | 35 | 37 | 32 | 34 | 36 | 33 |
| | Back | | 36 | 35 | 35 | 33 | 25 | 37 | 32 | 33 |
| Blocking property of sheet (g/50 mm) | | | 160 | 120 | 110 | 130 | 210 | 160 | 160 | 180 |
| Degree of yellowness of laminated glass | | | 1.2 | 1.2 | 1.1 | 1.2 | 1.7 | 2.3 | 1.5 | 1.9 |
| Bubbling of laminated glass (number of bubble glasses/number of samples) | | | 4/30 | 0/30 | 0/30 | 0/30 | 10/30 | 4/30 | 3/30 | 8/30 |
| Penetration resistance of laminated glass | | | 4.6 | 6.5 | 6.6 | 6.4 | 4.2 | 4.3 | 4.9 | 4.5 |

EP 2 083 039 A1

TABLE 4 (continued)

| | | | Example | | | | | Comparative Example | |
|---|---|---|---|---|---|---|---|---|---|
| | | | 49 | 50 | 51 | 52 | 53 | 21 | 22 |
| Extruder | L | | 0.15 | 0.15 | 0.15 | 0.15 | 0.15 | 0.03 | 0.4 |
| | Q/Ns | | 0.45 | 0.45 | 0.45 | 0.45 | 0.45 | 0.45 | 0.45 |
| Embossing rolls | First roll | Diameter $r_1$ (mm) | 600 | 600 | 150 | 600 | 600 | 600 | 600 |
| | | Surface roughness $Rz_1$ (μm) | 45 | 45 | 45 | 30 | 57 | 30 | 45 |
| | Second roll | Diameter $r_2$ (mm) | 450 | 450 | 600 | 450 | 450 | 450 | 450 |
| | | Surface roughness $Rz_2$ (μm) | 30 | 30 | 30 | 30 | 18 | 30 | 30 |
| | $r_1/r_2$ | | 1.3 | 1.3 | 0.25 | 1.3 | 1.3 | 1.3 | 1.3 |
| | $Rz_1/Rz_2$ | | 1.5 | 1.5 | 1.5 | 1 | 3.2 | 1 | 1.5 |
| Raw material resin | Aldehyde species and ratio | | B | B | B | B | B | B | B |
| | Degree of acetalization (mass%) | | 79.8 | 79.8 | 79.8 | 79.8 | 79.8 | 79.8 | 79.8 |
| | Porosity (%) | | 78 | 78 | 78 | 78 | 78 | 78 | 78 |
| | Supply rate (kg/h) | | 50 | 50 | 50 | 50 | 50 | 50 | 50 |
| Plasticizer | Supply rate (kg/h) | | 17 (Triethylene glycol-2-ethyl butyrate) | 17 | 17 | 17 | 17 | 17 | 17 |
| Supply rate of nitrogen gas (L/h) | | | 120 | 120 | 120 | 120 | 120 | 120 | 120 |
| Resin temperature at extruder outlet (°C) | | | 210 | 210 | 210 | 210 | 210 | 210 | 210 |
| Resin temperature at T-die outlet (°C) | | | 210 | 210 | 210 | 210 | 210 | 210 | 210 |
| Aperture thickness of T-die (mm) | | | 0.95 | 1.3 | 0.95 | 0.95 | 0.95 | 0.95 | 0.95 |
| Degree of yellowness of sheet | | | 1.4 | 1.8 | 1.2 | 1.2 | 1.3 | | 3.3 |
| Surface roughness of sheet Rz (μm) | Front | | 34 | 25 | 15 | 35 | 37 | | 14 |
| | Back | | 36 | 25 | 35 | 20 | 25 | Unextrudable | 10 |
| Blocking property of sheet (g/50 mm) | | | 150 | 250 | 350 | 300 | 400 | | 460 |
| Degree of yellowness of laminated glass | | | 1.5 | 1.9 | 1.1 | 1.2 | 1.3 | | 3.2 |
| Bubbling of laminated glass (number of bubble glasses/number of samples) | | | 0/30 | 0/30 | 1/30 | 2/30 | 5/30 | | 11/30 |
| Penetration resistance of laminated glass | | | 6.1 | 6.7 | 5 | 5.5 | 4.7 | | 2.2 |

EP 2 083 039 A1

It became clear that when the distance L from the raw material resin supply section to the plasticizer supply section of the screw extruder was less than 0.05, a bridge of the raw material resin could be made around the raw material resin supply section (Comparative Example 21). Furthermore, when L exceeded 0.3, coloring (yellowness) of the sheet increased (Comparative Example 22).

In contrast to it, when L was within the range of from 0.05 to 0.3, the sheet with low coloring and high transparency was obtained (Examples 21 to 24).

In addition, the sheets obtained in Examples 21 to 24 also had the low blocking property. Furthermore, the laminated glasses produced using these sheets showed little occurrence of coloring and bubble formation and had excellent penetration resistance (Examples 21 to 24).

In Examples 25 to 28, the temperature of the raw material resin at the T-die outlet of the extruder was investigated.

In Examples 29 to 32 and Examples 33 to 36, the supply amounts of the nitrogen gas and plasticizer were investigated and in Examples 37 to 40, the screw revolution number was investigated.

In Examples 41 to 48, the raw material resin, and the porosity and degree of acetalization thereof were investigated and in Example 49 the plasticizer was investigated.

In Example 50, the aperture thickness of the T-die was investigated and in Examples 51 to 53, the diameters and surface roughnesses of the embossing rolls were investigated.

It became clear from the above investigations that by setting the above-mentioned values in the specific ranges, it was feasible to produce a sheet with a low coloring degree, a uniform desired embossed pattern on both sides and with a low blocking property. Furthermore, it was confirmed that it was also feasible to suppress occurrence of coloring and bubbling and improve the penetration resistance in production of the laminated glass.

INDUSTRIAL APPLICABILITY

The polyvinyl acetal sheet of the present invention is considerably excellent as an interlayer for laminated glass because it is excellent in adhesion to glass, easy in control of adhesion, little colored, highly transparent and excellent in penetration resistance even under high-temperature conditions. Furthermore, a laminated glass using the polyvinyl acetal sheet obtained by the present invention is preferably used for automobiles, buildings, houses, and so on.

The entire disclosures of Japanese Patent Application No. 2006-287913 filed on Oct. 23, 2006 and Japanese Patent Application No. 2007-120466 filed on May 1, 2007 including the specifications, claims, drawings and summaries are incorporated herein by reference in their entireties.

**Claims**

1. A polyvinyl acetal sheet which is produced by molding polyvinyl acetal particles into a sheet with a degree of acetalization of from 75.0 to 84.0 mass% and with a porosity of from 60 to 85%.

2. The polyvinyl acetal sheet according to Claim 1, wherein the polyvinyl acetal particles are obtained by an acetalization reaction of 100 parts by mass of a polyvinyl alcohol and from 40 to 75 parts by mass of an aldehyde in the presence of an acid catalyst at a temperature of from 20 to 60°C, the acetalization reaction comprising supplying the polyvinyl alcohol, the aldehyde and the acid catalyst to a reactor to bring about acetalization, discharging a reaction mixture from the reactor after the degree of acetalization of the produced polyvinyl acetal has reached 13 mass%, and subjecting the discharged reaction mixture to an aging reaction.

3. The polyvinyl acetal sheet according to Claim 2, wherein the reactor is a reactor the inside of which is filled with a reaction solution.

4. The polyvinyl acetal sheet according to Claim 2 or 3, wherein the inside of the reactor is agitated at an agitation power of from 0.5 to 1.5 kw per unit volume.

5. The polyvinyl acetal sheet according to any one of Claims 1 to 4, wherein the aldehyde contains at least butyraldehyde.

6. The polyvinyl acetal sheet according to any one of Claims 1 to 5, which contains from 10 to 50 parts by mass of a plasticizer to 100 parts by mass of the polyvinyl acetal particles.

7. A laminate which is produced by laminating at least two polyvinyl acetal sheets as defined in any one of Claims 1 to 6.

8. An interlayer for laminated glass using the polyvinyl acetal sheet or the laminate as defined in any one of Claims 1 to 7.

9. A process for producing the polyvinyl acetal sheet as defined in Claim 1, the process comprising supplying the polyvinyl acetal particles and a plasticizer to conduct extrusion with use of a sheet-forming apparatus which comprises a screw extruder having a polyvinyl acetal particle supply section and a plasticizer supply section, a T-die and a take-off unit having an embossing roll and which satisfies a condition of L=0.05 to 0.3 where a distance from the polyvinyl acetal particle supply section to a tip of a screw in the screw extruder is 1 and a distance from the polyvinyl acetal particle supply section to the plasticizer supply section is L.

10. The process for producing the polyvinyl acetal sheet according to Claim 9, wherein the plasticizer is continuously supplied at a rate of from 20 to 50 kg/h to a supply of 100 kg/h of the polyvinyl acetal particles.

11. The process for producing the polyvinyl acetal sheet according to Claim 9 or 10, which satisfies a condition of $0.2 \leqq Q/Ns \leqq 0.5$ where Q (kg/h) is a sum of a supply of the polyvinyl acetal particles(kg/h) and a supply of the plasticizer (kg/h), and Ns is revolutions per minute (r.p.m.) of the screw.

12. The process for producing the polyvinyl acetal sheet according to any one of Claims 9 to 11, wherein the plasticizer is triethylene glycol di-2-ethyl hexanoate.

13. The process for producing the polyvinyl acetal sheet according to any one of Claims 9 to 12, wherein a thickness of an aperture of the T-die is from 1 to 1.6 times a thickness of the polyvinyl acetal sheet to be produced.

14. The process for producing the polyvinyl acetal sheet according to any one of Claims 9 to 13, wherein the embossing roll is two embossing rolls placed in parallel and satisfying relations of diameters and surface roughnesses represented by the formula (1) below, and wherein the polyvinyl acetal particles extruded from the T-die are made to pass between the embossing rolls to conduct a surface treatment:

$$r_1/r_2 > 0.3 \text{ and } 3.0 > Rz_1/Rz_2 > 1.2 \qquad (1)$$

where $r_1$ is a diameter of the first embossing roll, $r_2$ is a diameter of the second embossing roll, $Rz_1$ is a surface roughness of the first embossing roll, and $Rz_2$ is a surface roughness of the second embossing roll.

15. An interlayer for laminated glass using the polyvinyl acetal sheet obtained by the process as defined in any one of Claims 9 to 14.

16. A laminated glass using the interlayer for laminated glass as defined in Claim 8 or 15.

## Fig. 1

## Fig. 2

## Fig. 3

## Fig. 4

<table>
<tr><td colspan="2" align="center">**INTERNATIONAL SEARCH REPORT**</td><td>International application No.<br>PCT/JP2007/064817</td></tr>
</table>

| | |
|---|---|
| A.   CLASSIFICATION OF SUBJECT MATTER<br>*C08J5/18*(2006.01)i, *B29C47/38*(2006.01)i, *B29C59/04*(2006.01)i, *B32B27/30* (2006.01)i, *C03C27/12*(2006.01)i, *C08F8/28*(2006.01)i, *C08J3/12*(2006.01)i, *C08L29/14*(2006.01)i, *B29K59/00*(2006.01)n<br>According to International Patent Classification (IPC) or to both national classification and IPC | |

**B.   FIELDS SEARCHED**

Minimum documentation searched (classification system followed by classification symbols)
C08J5/18, B29C47/00-47/96, B29C59/00-59/18, B32B17/00-17/12, B32B27/00-27/42, C03C27/00-27/12, C08F8/28, C08J3/12-3/16, C08L29/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | WO 03/066690 A1  (Denki Kagaku Kogyo Kabushiki Kaisha),<br>14 August, 2003 (14.08.03),<br>Claims; examples<br>& AU 2003207182 A1        & CA 2475255 A1<br>& CN 1630670 A          & CN 1282666 C<br>& EP 1473309 A1         & JP 2004-217763 A<br>& JP 2004-217764 A      & JP 2003-226714 A<br>& JP 2003-335817 A      & NZ 534383 A<br>& US 2005/0159545 A1 | 1-16 |
| A | JP 5-1108 A  (Sekisui Chemical Co., Ltd.),<br>08 January, 1993 (08.01.93),<br>Claims; Par. Nos. [0001] to [0011]; examples<br>(Family: none) | 1-16 |

☐  Further documents are listed in the continuation of Box C.          ☐  See patent family annex.

| | |
|---|---|
| *     Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br>27 August, 2007 (27.08.07) | Date of mailing of the international search report<br>04 September, 2007 (04.09.07) |
| Name and mailing address of the ISA/<br>Japanese Patent Office | Authorized officer |
| Facsimile No. | Telephone No. |

Form PCT/ISA/210 (second sheet) (April 2005)

**EP 2 083 039 A1**

## REFERENCES CITED IN THE DESCRIPTION

### Patent documents cited in the description

- JP 2000001514 A
- JP 11349769 A
- JP 2006287913 A
- JP 2007120466 A